# EUROPÄISCHE PATENTSCHRIFT

(11) **EP 4 581 351 B1**
(45) Veröffentlichungstag und Bekanntmachung des Hinweises auf die Patenterteilung: **02.12.2026**
(21) Anmeldenummer: 23762178.4
(22) Anmeldetag: 23.08.2023
(51) Int. Cl.: G01N 21/71, G01N 21/85, B07C 5/342

(54) **VERFAHREN UND SYSTEM ZUM ANALYSIEREN VON OBJEKTEN**
METHOD AND SYSTEM FOR ANALYZING OBJECTS
PROCÉDÉ ET SYSTÈME D'ANALYSE D'OBJETS

(30) Priorität: 30.08.2022 DE 102022121928; 30.08.2022 DE 102022121929
(43) Veröffentlichungstag der Anmeldung: 09.07.2025
(73) Patentinhaber: Steinert GmbH, 50933 Köln (DE)
(72) Erfinder: HABICH, Uwe, 50935 Köln (DE); SCHÄFER, Jochen, 41849 Wassenberg (DE); HEINRICHS, Stefan, 51107 Köln (DE); LANGE, Sebastian, 50829 Köln (DE); KILLMANN, Dirk, 50321 Brühl (DE); ROPER YEARWOOD, Andreas, 50823 Köln (DE); MARIN MORALES, Porfirio Jesus, 53332 Bornheim (DE)
(74) Vertreter: Kirschner, Sebastian
(86) Internationale Anmeldenummer: PCT/EP2023/073140
(87) Internationale Veröffentlichungsnummer: WO 2024/046844

(56) Entgegenhaltungen:
- EP-A1- 1 416 265
- EP-A1- 3 586 984
- EP-B1- 3 352 919
- US-A1- 2013 264 249
- MICHAEL STEPPUTAT ET AL: "On-Line Detection of Heavy Metals and Brominated Flame Retardants in Technical Polymers with Laser-Induced Breakdown Spectrometry", APPLIED OPTICS, vol. 42, no. 30, 20 October 2003 (2003-10-20), pages 6210 - 6220, XP055181966, ISSN: 0003-6935, DOI: 10.1364/AO.42.006210
- YAMAMOTO K Y ET AL: "DETECTION OF METALS IN THE ENVIRONMENT USING A PORTABLE LASER- INDUCED BREAKDOWN SPECTROSCOPY INSTRUMENT", APPLIED SPECTROSCOPY, THE SOCIETY FOR APPLIED SPECTROSCOPY. BALTIMORE, US, vol. 50, no. 2, February 1996 (1996-02-01), pages 222 - 233, XP000550075, ISSN: 0003-7028, DOI: 10.1366/0003702963906519

## Beschreibung

Die Erfindung betrifft ein Verfahren zum Analysieren von Objekten mit den Merkmalen des Oberbegriffes des Patentanspruches 1 und ein System zum Analysieren von Objekten mit den Merkmalen des Oberbegriffes des Patentanspruches 16.

Derartige Verfahren und Systeme zum Analysieren und insbesondere auch zum Sortieren von Objekten werden zum Beispiel insbesondere während des Recyclings von Objekten eingesetzt. Bei den zu analysierenden und / oder zu sortierenden Objekten kann es sich insbesondere um Metallteile, Metallschrotte, insbesondere Aluminiumschrott, Erzbrocken, Batterien, Verpackungen, Abfall oder dergleichen handeln.

Die EP 3 586 984 A1 beschreibt ein Verfahren und eine Vorrichtung zum Sortieren und Analysieren von Schüttgut, umfassend eine Laser-Detektionseinheit mit einem LIBS-Online-Analysesystem (Laser-Induced Breakdown Spectroscopy/Laser-Induced Plasma Spectroscopy), das in die Sortiervorrichtung integriert ist. Ein Zuführsystem für Schüttgut umfasst ein Förderband, von dessen Ende ankommendes zu analysierendes Material auf eine Flugbahn abgeworfen wird, auf die ein Laserstrahl fokussiert wird, der in dem zu analysierenden Material ein Plasma erzeugt. Das aus dem Plasma resultierende Signal wird von einem Detektor am Ende des Förderbandes in der Nähe des Lasers erfasst. Die Vorrichtung umfasst auch ein System mit einer Umleitvorrichtung, die die gewünschten oder unerwünschten Materialien trennt.

Ein entsprechendes Verfahren und ein derartiges System zum Analysieren von Objekten ist auch aus der EP 3 352 919 B1 bekannt. Die Objekte verlassen ein als Rutsche ausgeführtes Zuführmittel auf einer entsprechenden Flugbahn und werden während des Fluges analysiert und auch anhand der Analyse entsprechend sortiert. Zur Analyse sind ein Analyselaser und ein Spektrometer unterhalb der Flugbahn angeordnet. Weiterhin ist ein "Vorreinigungs-Laser" (Ablationslaser) vorgesehen, um die Objekte vor der Analyse entsprechend zu reinigen. Der Analyselaser und der Vorreinigungs-Laser sind parallel oder in einem Winkel zueinander angeordnet. Die mittels des Vorreinigungs-Lasers erzeugte Emission des an dem Objekt erzeugten Plasmas ist nicht mittels des Spektrometers erfassbar. Ein Trennblech ist zwischen den beiden Lasern und insbesondere auch zwischen dem Vorreinigungs-Laser und dem Spektrometer angeordnet, so dass etwaige durch den Vorreinigungs-Laser an dem Objekt initiierte Emissionen von dem Trennblech abgefangen werden, bevor diese das Spektrometer erreichen können. Der Vorreinigungs-Laser dient somit lediglich der Vorreinigung bzw. zur Ablation des Objektes. Die Emission des mittels des Analyselasers an dem Objekt erzeugten Plasmas ist dem hingegen mittels des Spektrometers erfassbar und wird zur Analyse des Objektes ausgewertet. Das mittels des Analyselasers erzeugte Plasma wird an der mittels des Vorreinigungs-Lasers vorgereinigten Stelle des Objektes erzeugt, so dass das Objekt selbst bzw. das Material dieses Objektes und nicht etwaige Verschmutzungen des Objektes mittels des Spektrometers analysiert werden. Anders ausgedrückt kann man sagen, dass ein Fokuspunkt des Analyselaser in einem Sichtfeld des Spektrometers liegt, ein Fokuspunkt des Vorreinigungs-Lasers aber außerhalb des Sichtfeldes des Spektrometers liegt. Der Analyselaser weist hierbei eine Pulswiederholrate von 50 kHz oder mehr auf. Bei einem jedem Laserpuls des Analyselasers wird zur Erzeugung des Plasmas an einem Messpunkt ein Einschusskrater an dem Objekt erzeugt. Bei der genannten hohen Pulswiederholrate können Überlappungen von zumindest zwei Einschusskratern auftreten. Zwei aufeinanderfolgende Laserpulse treffen dann zumindest teilweise in einem gleichen Bereich des Objektes auf das Objekt auf. Bei der hier im Stand der Technik bekannten Vorrichtung weist das Zuführmittel mehrere Zuführspuren auf, wobei jeder Zuführspur ein Laser bzw. jeweils eine Ausblasdüse zugeordnet ist, wobei die Ausblasdüsen in einer sogenannten Düsenleiste ausgebildet sind.

Das zuvor beschriebene bekannte Verfahren bzw. System ist noch nicht optimal ausgebildet. Das bekannte Spektrometer weist hier eine Abbildungsoptik auf, durch welche die Emissionen bzw. die Strahlung dann in das Spektrometer eintreten. Aufgrund der Abbildungsoptik weist das Spektrometer ein begrenztes, kleines Sichtfeld auf, so dass bereits Ungenauigkeiten bei der Justierung des Spektrometers zu erheblichen Funktionsstörungen des Spektrometers führen können. Weiterhin treten an einem Kollimator der Abbildungsoptik sogenannte chromatische "Aberrationen" auf, wobei Emissionen unterschiedlicher Wellenlänge verschieden stark gebrochen werden, wobei der Kollimator aber nicht zugleich für jede Wellenlänge "scharf" gestellt werden kann Das führt wiederum zu Problemen bei der Auswertung der Messergebnisse des Spektrometers, so dass das jeweilige Material des jeweiligen zu analysierenden Objektes unter Umständen dann nicht korrekt bestimmt werden kann bzw. mit entsprechenden Fehlertoleranzen behaftet ist.

Der Erfindung liegt daher die Aufgabe zugrunde, das bekannte Verfahren und / oder das bekannte System zum Analysieren von Objekten nun derart auszugestalten und / oder weiterzubilden, dass eine Analyse der Objekte verbessert ist, wobei insbesondere das Material der Objekte mit einer höheren Sicherheit korrekt bestimmt wird bzw. bestimmbar ist, insbesondere auch etwaige höhere Kosten vermieden sind.

Diese der Erfindung zugrunde liegende Aufgabe wird nun zunächst durch ein Verfahren zum Analysieren von Objekten mit den Merkmalen des Patentanspruches 1 gelöst.

Der wesentliche Aspekt der Erfindung liegt nun zunächst im Wesentlichen darin, dass das Sichtfeld des Spektrometers durch ein offenes Faserende einer optischen Faser realisiert ist.

Ein solches offenes Faserende ist zunächst besonders einfach herstellbar, insbesondere auch kostengünstig herstellbar. Weiterhin ist das offene Faserende, insbesondere gegenüber dem Einsatze eines bekannten Kollimators, unempfindlicher gegenüber Ungenauigkeiten bei der Justierung des Spektrometers, da das offene Faserende gegenüber dem Einsatze eines Kollimators ein deutlich größeres Sichtfeld aufweist. Weiterhin können mittels des nun offenen Faserendes die an einem Kollimator auftretenden chromatischen "Aberrationen" erfolgreich vermieden werden, da mittels des offenen Faserendes Emissionen unterschiedlicher Wellenlänge mit den gleichen Verhältnissen der Intensitäten aufgenommen werden mit denen sie vom Plasma emittiert werden. Dies ist weiterhin dann sehr vorteilhaft, wenn die von dem offenen Faserende aufgenommene Intensität wegen der möglichen unterschiedlichen Abstände der Plasmen zu dem offenen Faserende schwankt. Letzteres kann aufgrund der teils komplexen Geometrien der Objekte nicht vermieden werden. Die unterschiedlichen Intensitäten können dann aber bei der Verwendung eines offenen Faserendes (ohne dass ein Kollimator vorgesehen ist) eindeutig, insbesondere ohne eine Verfälschung der Intensitätsverhältnisse aufgenommen werden und/oder auch dann den unterschiedlichen Abständen zugeordnet werden. Das offene Faserende wird insbesondere auch derart nah zur Flugbahn der Objekte positioniert, dass die Emissionen das offene Faserende mit für eine genaue Messung ausreichend hoher Intensität erreichen können. Die Emissionen der von dem Analyselaser an den Objekten erzeugten Plasmen werden daher mittels des offenen Faserendes aufgenommen. Das offene Faserende ist daher weniger justierempfindlich als ein Kollimator, dessen exakte gleiche Einstellung bei mehreren Zuführspuren / Messspuren höchst problematisch ist. Das Sichtfeld des offenen Faserendes ist ohne eine Linse insbesondere groß genug, ein Plasma vollständig zu erfassen, auch wenn durch die Oberflächenform des Objektes sich die Position des Plasmas etwas verändert.

Bei der Erzeugung der Plasmen entsteht, insbesondere elektromagnetische, Strahlung, insbesondere Licht mit/in bestimmten Wellenlängen, wobei die jeweilige Wellenlänge und / oder das Intensitätsspektrum jeweils charakteristisch für das jeweilige Material der jeweiligen Objekte ist. Die Strahlung gelangt ausgehend von den Plasmen schlussendlich für die Analyse schließlich bis zum Spektrometer bzw. zu den Sensoren des Spektrometers. Diese, insbesondere elektromagnetische, Strahlung, insbesondere das entsprechende Licht mit den jeweiligen Wellenlängen, wird hier auch als "die Emission/die Emissionen" der Plasmen bezeichnet. Hierüber lässt sich dann das jeweilige Material der Objekte bestimmen.

Die Emissionen der Plasmen werden in Form von elektromagnetischer Strahlung von den Plasmen zunächst daher zu dem offenen Faserende übertragen. Die Emissionen bzw. die Strahlung wird an dem offenen Faserende in die optische Faser eingekoppelt. Anders ausgedrückt, die Emissionen bzw. die Strahlung treten an dem offenen Faserende direkt in die optische Faser ein. Mittels der optischen Faser werden die Emissionen bzw. die Strahlung dann zu einem Sensor des Spektrometers weitergeleitet, wobei die Emissionen bzw. die Strahlung dann hier mittels des Sensors bzw. der Sensoren in elektrische Signale umwandelbar sind.

In einer weiteren Ausführungsform bzw. Ausgestaltung des Verfahrens wird mit Hilfe eines zweiten Lasers ein zweiter Laserstrahl mit einem zweiten Fokuspunkt erzeugt, wobei der zweite Laser derart zu dem Zuführmittel ausgerichtet ist und / oder ausgerichtet wird, dass die Objekte während ihrer jeweiligen Bewegung auf ihrer jeweiligen Flugbahn den zweiten Laserstrahl im Bereich des zweiten Fokuspunktes durchfliegen.

Der zweite Laser ist insbesondere als ein zweiter Analyselaser oder als ein Ablationslaser ausgebildet und / oder ausgeführt bzw. wird entsprechend dann so eingesetzt.

Für den Fall, dass der zweite Laser als ein Analyselaser ausgebildet ist, liegt der zweite Fokuspunkt des zweiten Analyselasers insbesondere auch im Sichtfeld des Spektrometers bzw. hier dann in dem durch das offene Faserende der optischen Faser ausgebildeten Sichtfeld. Der erste Analyselaser und der zweite Analyselaser sind bzw. werden dann derart zueinander ausgerichtet, so dass der erste Fokuspunkt des ersten Analyselasers zum zweiten Fokuspunkt des zweiten Analyselasers beabstandet ist, wobei mittels des ersten Fokuspunktes des ersten Analyselasers und / oder mittels des zweiten Fokuspunktes des zweiten Analyselasers Plasmen der Objekte erzeugt werden, und wobei mittels des Spektrometers die Emissionen dieser Plasmen spektroskopisch analysiert werden.

Auf diese Art und Weise werden auch Objekte mit komplexerer Geometrie, insbesondere nicht flach ausgeführte Objekte, wie gewünscht optimal analysiert. Die Art des Materials der Objekte wird mit großer Sicherheit richtig und korrekt bestimmt. Mittels der jeweiligen Analyselaser wird nämlich an einer Vielzahl von Messpunkten Plasma an dem jeweiligen Objekt erzeugt, wobei die Emissionen bevorzugterweise die Emission aller dieser Plasmen mittels des Spektrometers ausgewertet werden. Wenn aufgrund der komplexen Geometrie des zu analysierenden Objektes mittels eines der beiden Analyselaser kein auswertbares Plasma erzeugt wird, so wird bei der bevorzugten Ausführungsform des Verfahrens aber mittels einer hohen Wahrscheinlichkeit zumindest mittels des anderen der beiden Analyselaser dann zumindest ein auswertbares Plasma erzeugt. Es sei an dieser Stelle angemerkt, dass die Fokuspunkte eine gewisse räumliche Ausdehnung aufweisen und insbesondere durch eine entsprechende Bündelung der von den Analyselasern ausgesendeten Laserstrahlen erzeugt werden.

Alternativ ist denkbar, dass der Fokuspunkt des zweiten Lasers, insbesondere des Ablationslasers, außerhalb des Sichtfeldes des Spektrometers liegt, also außerhalb des durch das offene Faserende realisierten Sichtfeldes. Der zweite Laser wird dann aufgrund seiner Funktion nicht als Analyselaser, sondern zur "Vorablation" der Objekte verwendet / eingesetzt.

Der erste Analyselaser und der zweite Analyselaser werden in einer weiteren Ausführungsform bzw. weiteren Ausgestaltung des Verfahrens derart zueinander ausgerichtet, dass der Fokuspunkt des ersten Analyselasers und der Fokuspunkt des zweiten Analyselasers insbesondere auf einer im Wesentlichen Senkrechten zur Flugbahn der Objekte beabstandet übereinander liegen.

Die Anzahl der Messpunkte, an welchen ein mittels des Spektrometers auswertbares Plasma erzeugt wird, kann so weiter erhöht werden. Somit ist die Sicherheit einer korrekten Analyse der Art des Materials der Objekte weiter erhöht. Nochmal anders ausgedrückt: Das jeweilige spezifische Material der Objekte lässt sich dadurch sehr korrekt bestimmen.

Der erste Analyselaser und der zweite Laser, insbesondere der zweite Analyselaser bzw. der Ablationslaser, werden in einer weiteren, alternativen Ausführungsform des Verfahrens derart zueinander ausgerichtet, dass der Fokuspunkt des ersten Analyselasers und der Fokuspunkt des zweiten Lasers im Wesentlichen horizontal in Förderrichtung der Objekte nebeneinander liegen.

Die Anzahl der Messpunkte, an welchen ein mittels des Spektrometers auswertbares Plasma erzeugt wird, insbesondere wenn bei der bevorzugten Ausführungsform beide Laser als Analyselaser eingesetzt werden, kann auch mittels der horizontalen Anordnung der Fokuspunkte weiter erhöht werden. Somit ist auch hiermit die Sicherheit für eine korrekte Analyse der Art des Materials der Objekte entsprechend erhöht. Letzteres gilt insbesondere auch dann, wenn der zweite Laser als Ablationslaser ausgebildet und eingesetzt wird. Insbesondere kann je nach der spezifischen Form und / oder dreidimensionale Ausbildung der Objekte die jeweilige zuvor erwähnte Möglichkeit der Ausrichtung der Fokuspunkte zueinander sehr vorteilhaft sein.

Die Emissionen der von dem ersten Analyselaser und / oder dem zweiten Analyselaser an den Objekten erzeugten Plasmen werden mittels des offenen Faserendes aufgenommen bzw. über das offene Faserende ermittelt und / oder zunächst erfasst. Die Emissionen der Plasmen gelangen in Form von, insbesondere elektromagnetischer, Strahlung von den Plasmen zu dem offenen Faserende. Die Emissionen bzw. die Strahlung wird an dem offenen Faserende direkt in die optische Faser eingekoppelt: Nochmal anders ausgedrückt, die Emissionen bzw. die Strahlung treten an dem offenen Faserende in die optische Faser ein. Mittels der optischen Faser werden die Emissionen bzw. die Strahlung zu einem Sensor bzw. Sensoren des Spektrometers weitergeleitet, wobei die Emissionen bzw. die Strahlung mittels des Spektrometers entsprechend analysiert werden können.

In einer weiteren Ausgestaltung des Verfahrens werden mittels des ersten Analyselasers und / oder mittels der zweiten Lasers Pulse mit einer bestimmten Pulswiederholrate emittiert. Der Wert dieser Pulswiederholrate in kHz entspricht einem bestimmten Wert der Geschwindigkeit der Objekte beim Verlassen des Zuführmittels in m/s multipliziert mit einem bestimmten Faktor, insbesondere einem Faktor von zumindest 15. Insbesondere weisen der erste Analyselaser und / oder der zweite Laser eine bestimmte Pulswiederholrate auf. Ist der zweite Laser als Ablationslaser ausgeführt, weist dieser eine Pulswiederholrate von insbesondere mindestens 45 kHz und der erste Analyselaser dann eine Pulswiederholrate von insbesondere mindestens 5 kHz auf. Sind beide Laser als Analyselaser ausgeführt, so weisen die Laser eine Pulswiederholrate von insbesondere mindestens 20 kHz, insbesondere von zumindest 45 kHz auf.

Bei diesen Werten der Pulswiederholrate und entsprechenden, insbesondere auch bestimmten, Werten der Fokuspunktdurchmesser tritt eine Überlappung zweier aufeinander folgender Pulse der jeweiligen Analyselasers an den Objekten auf. Eine etwaige Reinigung bzw. Vorablation am jeweiligen Objekt erfolgt dann auch grundsätzlich bereits mittels eines jeweiligen Analyselasers, nämlich mittels eines vorrangehenden Pulses, wobei mittels des nachfolgenden Pulses, insbesondere dann die Bestimmung des jeweiligen Materials des jeweiligen Objektes mit großer Sicherheit korrekt ermöglicht ist.

Der erste Analyselaser und / oder der zweite Laser, insbesondere der zweite Analyselaser bzw. der Ablationslaser, weisen vorteilhafterweise eine Ausrichtungsvorrichtung auf. Bei Bedarf wird mittels einer jeden Ausrichtungsvorrichtung die Ausrichtung des zugehörigen Lasers und somit der Ort des zugehörigen Fokuspunktes geändert. Insbesondere kann die räumliche Anordnung der beiden Fokuspunkte des ersten Analyselasers und des zweiten Lasers zueinander und im Bezug zum Sichtfeld des Spektrometers geändert und / oder angepasst werden.

Auf diese Weise wird insbesondere die Einsatzflexibilität des Verfahrens erhöht. Die unterschiedlichen Anordnungen sind schnell einstellbar, unter Umständen werden die Ausrichtungen sogar während des Betriebs des Systems vorgenommen. So kann die Ausrichtung der Laser zueinander und im Bezug zum Sichtfeld des Spektrometers je nach der jeweiligen Art der zu analysierenden Objekte angepasst und / oder optimiert werden. Es ist daher zum Beispiel möglich, die Objekte während ihrer Bewegung mittels des Zuführmittels bzw. auf dem Zuführmittel mittels eines weiteren Detektionsmittels/Sensors, z.B. mit einer Kamera zu erfassen und / oder deren Geometrie, Größe und / oder Lage auf dem Zuführmittel entsprechend zu analysieren und demnach die Laser optimal zueinander und im Bezug zum Sichtfeld des Spektrometers, insbesondere automatisch durch die Ansteuerung von Aktoren der Ausrichtungsvorrichtungen, auszurichten.

In der bevorzugten Ausführungsform bzw. Ausgestaltung des Verfahrens ist eine Sortiervorrichtung vorgesehen und / oder vorhanden, wobei die Objekte dann anhand der mittels des Spektrometers generierten Messdaten, insbesondere in Abhängigkeit eines ermittelten bestimmten Materials der Objekte, in zumindest zwei unterschiedliche Kategorien, insbesondere mittels eines Luftstrahls, sortiert und / oder aussortiert werden.

Durch diese Sortierung wird bspw. ein nachfolgendes Recycling der Objekte vereinfacht, da Objekte des gleichen Materials besser zu recyceln sind.

In einer weiteren Ausgestaltung des Verfahrens ist zumindest eine Steuereinheit und / oder ein Computer vorgesehen und / oder vorhanden. Das insbesondere als Förderband ausgebildete Zuführmittel, insbesondere dessen Antrieb, wird mittels der Steuereinheit und / oder dem Computer gesteuert und / oder geregelt, insbesondere die Geschwindigkeit des Förderbandes. Der erste Analyselaser wird mittels der Steuereinheit und / oder dem Computer gesteuert und / oder geregelt. Der zweite Laser, insbesondere der zweite Analyselaser bzw. der Ablationslaser, wird mittels der Steuereinheit und / oder dem Computer gesteuert und / oder geregelt. Das Spektrometer wird mittels der Steuereinheit und / oder dem Computer gesteuert und / oder geregelt bzw. ist datentechnisch mit der Steuereinheit und / oder dem Computer wirksam verbunden. Mittels der Steuereinheit und / oder dem Computer werden die mittels des Spektrometers generierten Messdaten ausgewertet und insbesondere wird hiermit das Material der Objekte bestimmt. Insbesondere wird daraufhin die Sortiervorrichtung mittels der Steuereinheit und / oder dem Computer gesteuert und / oder geregelt.

Zur Steuerung des ersten Analyselasers und / oder zur Steuerung des zweiten Lasers, insbesondere des zweiten Analyselasers bzw. des Ablationslasers, ist insbesondere ein erstes und / oder ein zweites Steuermodul vorgesehen und / oder vorhanden, wobei der erste Analyselaser und / oder der zweite Laser und / oder das erste und / oder zweite Steuermodul als ein LIBS-System oder als Teil eines LIBS-Systems ausgeführt und / oder ausgebildet ist. Insbesondere die optische Faser, insbesondere auch mit dem offenen Faserende, und / oder das Spektrometer ist bzw. sind als Teil des LIBS-Systems ausgebildet und / oder ausgeführt. Hierbei können die Steuermodule für den ersten und / oder den zweiten Laser funktionstechnisch und / oder bauteiltechnisch Teil der Steuereinheit und / oder des Computers sein, insbesondere in die Steuereinheit und / oder den Computer integriert sein. Auch die Steuereinheit und / oder der Computer ist insbesondere als Teil des LIBS-Systems ausgebildet bzw. bildet hier einen wesentlichen Bestandteil.

In einer weiteren Ausgestaltung des Verfahrens sind weitere Detektionsmittel vorgesehen und / oder vorhanden, mit deren Hilfe die Geometrie und / oder Größe und / oder Lage der Objekte auf dem Zuführmittel ermittelbar sind. Insbesondere ist ein entsprechendes Kamerasystem vorgesehen und / oder steuerungstechnisch mit der Steuereinheit und / oder dem Computer wirksam verbunden ist.

Die der Erfindung zugrunde liegende Aufgabe wird nun des Weiteren durch ein System zum Analysieren von Objekten mit den Merkmalen des Patentanspruches 16 gelöst.

Der wesentliche Aspekt der Erfindung liegt dann zunächst darin, dass das Sichtfeld des Spektrometers durch ein offenes Faserende einer optischen Faser realisiert ist.

Ein solches offenes Faserende ist zunächst besonders einfach herstellbar, insbesondere kostengünstig herstellbar. Weiterhin ist das offene Faserende, insbesondere gegenüber dem Einsatze eines vor dem Faserende positionierten Kollimators, unempfindlich gegenüber Ungenauigkeiten bei der Justierung des Spektrometers, da das offene Faserende gegenüber dem Einsatze eines Kollimators ein deutlich größeres Sichtfeld aufweist. Weiterhin können mittels des offenen Faserendes die üblichen ansonsten an einem Kollimator auftretenden chromatischen "Aberrationen" erfolgreich vermieden werden, da mittels des offenen Faserendes Emissionen unterschiedlicher Wellenlänge mit gleichen Verhältnissen der Intensitäten aufgenommen werden, mit denen sie vom Plasma emittiert werden. Dies ist weiterhin dann von Vorteil, wenn die von dem offenen Faserende aufgenommene Intensität wegen unterschiedlicher Abstände der Plasmen zu dem offenen Faserende schwankt. Letzteres kann aufgrund der teils komplexen Geometrien der Objekte nicht vermieden werden. Die unterschiedlichen Intensitäten können dann aber bei Verwendung des offenen Faserendes (ohne dass ein Kollimator vorgesehen ist) eindeutig, insbesondere ohne eine Verfälschung der Intensitätsverhältnisse aufgenommen werden und / oder auch dann den unterschiedlichen Abständen zugeordnet werden. Das offene Faserende wird insbesondere derart nah zur Flugbahn der Objekte positioniert, dass die Emissionen das offene Faserende mit für eine genaue Messung ausreichend hoher Intensität erreichen. Die Emissionen der von dem Analyselaser an den Objekten erzeugten Plasmen sind daher mittels des offenen Faserendes aufnehmbar.

Ein bevorzugter Abstand zwischen dem offenen Faserende und dem Ende des Zuführmittels, insbesondere bis zur Abwurfkante des Zuführmittels, weist in einer weiteren bevorzugten Ausgestaltung des Systems einen bestimmten Wert, insbesondere von weniger als 350 mm, insbesondere zwischen 50mm und 200 mm, auf. Bei diesen Werten des Abstandes wird die ausreichend hohe Intensität der in das offene Faserende eintretenden Emissionen sicher erreicht.

In einer weiteren Ausgestaltung des Systems weist das offene Faserende eine numerische Apertur mit einem Wert von 0,14 bis 0,28, insbesondere von 0,18 bis 0,24, auf. Der volle "Öffnungswinkel" des offenen Faserendes beträgt insbesondere 15 bis 50 Grad, liegt insbesondere zwischen 20 bis 30 Grad.

Die optische Faser ist bevorzugterweise als sogenannte Stufenindex-Faser, insbesondere als Multimode-Faser, ausgeführt. Somit können sich mehrere Moden der von der optischen Faser aufgenommenen Strahlung in der optischen Faser ausbreiten bzw. erfasst und / oder an das Spektrometer übermittelt werden.

In einer weiteren Ausführungsform des Systems weist die optische Faser einen Quarzglaskern und eine Ummantelung auf. Insbesondere weist die Ummantelung eine äußere Acrylat-Ummantelung und eine Fluor-dotierte Zwischenschicht auf.

Die optische Faser weist in einer bevorzugten Ausführungsform des Systems einen Kerndurchmesser mit einem Wert von 50 µm bis 700 µm, insbesondere von 400 µm bis 600 µm, auf. Bei derartigen Werten des Kerndurchmessers ist sichergestellt, dass die optische Faser ausreichend gut biegbar ist, um das offene Faserende der optischen Faser einerseits an der gewünschten Position zu positionieren und anderseits die optische Faser mit weiteren Funktionselementen wie einer Auswerteeinheit des Spektrometers bzw. mit dem Spektrometer wirksam zu verbinden. Weiterhin wirkt sich auch dieser Kerndurchmesser auf die zur Messung ausreichend hohe Intensität der in die optische Faser eingekoppelten Strahlung auf, wobei hier eine im Wesentlichen quadratische Abhängigkeit zwischen der eingekoppelten Strahlungsmenge und dem Kerndurchmesser besteht.

Bevorzugt ist ein zweiter Laser vorgesehen und / oder vorhanden, wobei der zweite Laser als zweiter Analyselaser oder als Ablationslaser ausgebildet und / oder ausgeführt ist, wobei mittels des zweiten Lasers ein zweiter Laserstrahl mit einem zweiten Fokuspunkt erzeugbar ist, und wobei der zweite Laser derart zu dem Zuführmittel ausgerichtet ist, dass die Objekte während ihrer jeweiligen Bewegung auf ihrer jeweiligen Flugbahn den zweiten Laserstrahl im Bereich des zweiten Fokuspunktes durchfliegen.

Hierbei ist der zweite Fokuspunkt, wenn der zweite Laser als zweite Analyselaser ausgebildet ist, auch im Sichtfeld des Spektrometers angeordnet ist. Der erste Analyselaser und der zweite Analyselaser sind dann derart zueinander ausgerichtet, dass der erste Fokuspunkt des ersten Analyselasers zum zweiten Fokuspunkt des zweiten Analyselasers beabstandet angeordnet ist, wobei mittels des ersten Fokuspunktes des ersten Analyselasers und / oder mittels des zweiten Fokuspunktes des zweiten Analyselasers Plasmen der Objekte erzeugbar sind, und wobei mittels des Spektrometers die Emissionen dieser Plasmen spektroskopisch analysierbar sind.

Auf diese Art und Weise sind auch Objekte mit komplexerer Geometrie, insbesondere auch von komplexerer dreidimensionaler Geometrie, insbesondere nicht flach ausgeführte Objekte, wie gewünscht analysierbar. Die Art des Materials der Objekte ist mit großer Sicherheit richtig und korrekt bestimmbar. Mittels der beiden Analyselaser ist nämlich an einer Vielzahl von Messpunkten ein entsprechendes Plasma an dem jeweiligen Objekt erzeugbar, wobei die Emissionen dieser Plasmen mittels des Spektrometers auswertbar sind. Wenn aufgrund einer sehr komplexen Geometrie des zu analysierenden Objektes, insbesondere mittels eines der beiden Analyselaser kein auswertbares Plasma erzeugbar ist, so ist aber mittels einer hohen Wahrscheinlichkeit zumindest dann mittels des anderen der beiden Analyselaser ein auswertbares Plasma erzeugbar.

Alternativ bzw. weiterhin ist denkbar, dass der Fokuspunkt des zweiten Lasers, insbesondere des Ablationslaser außerhalb des Sichtfeldes des Spektrometers liegt, also außerhalb des durch das offenen Faserendes realisierten Sichtfeldes. Der zweite Laser wird dann aufgrund seiner Funktion nicht als "Analyselaser", sondern zur "Vorablation" der Objekte, also insbesondere zur teilweisen "Reinigung" der Objekte verwendet / eingesetzt bevor diese mit Hilfe des ersten Analyselasers analysiert werden.

In einer bevorzugten Ausführungsform des Systems sind der erste Analyselaser und der zweite Analyselaser derart zueinander ausgerichtet, dass der erste Fokuspunkt des ersten Analyselasers und der zweite Fokuspunkt des zweiten Analyselasers auf einer im Wesentlichen Senkrechten zur Flugbahn der Objekte beabstandet übereinander angeordnet sind. Der erste Fokuspunkt des ersten Analyselasers weist somit einen anderen vertikalen Abstand zu dem Ende, insbesondere zu der Abwurfkante des Zuführmittels bzw. zu einer durch das Ende des Zuführmittels horizontal verlaufenden Ebene auf, als der zweite Fokuspunkt des zweiten Analyselasers. Die Anzahl der Messpunkte, an welchen ein mittels des Spektrometers auswertbares Plasma erzeugbar ist, kann so weiter erhöht werden. Somit ist weiterhin auch die Sicherheit einer richtigen und korrekten Analyse der Art des Materials der Objekte weiter erhöht.

In einer weiteren zweiten bevorzugten Ausführungsform des Systems sind der erste Analyselaser und der zweite Laser, insbesondere der zweite Analyselaser bzw. der Ablationslaser derart zueinander ausgerichtet, dass der erste Fokuspunkt des ersten Analyselasers und der zweite Fokuspunkt des zweiten Lasers im Wesentlichen horizontal in Förderrichtung der Objekte nebeneinander angeordnet sind. Die Anzahl der Messpunkte, an welchen ein mittels des Spektrometers jeweiliges auswertbares Plasma erzeugbar ist, insbesondere wenn der zweite Laser als zweite Analyselaser ausgebildet ist, kann auch so, insbesondere in Abhängigkeit der spezifischen Form, insbesondere einer etwaigen komplexeren dreidimensionalen Ausbildung der Objekte, weiter erhöht werden. Somit ist die Sicherheit einer richtigen und korrekten Analyse der Art des Materials der Objekte weiter erhöht.

Das Spektrometer weist daher nun die optische Faser mit dem offenen Faserende zur Aufnahme und / oder Ermittlung und / oder Erfassung der Emissionen der von dem ersten Analyselaser und / oder der von dem zweiten Analyselaser an den Objekten erzeugten Plasmen auf. Das Sichtfeld des Spektrometers ist daher somit insbesondere ausschließlich durch das offene Faserende der optischen Faser realisiert.

Ein solches offenes Faserende ist besonders einfach herstellbar. Weiterhin ist das offene Faserende, insbesondere gegenüber dem Einsatz eines Kollimators vor dem Faserende, unempfindlich gegenüber Ungenauigkeiten bei der Justierung des Spektrometers, da das offene Faserende gegenüber dem Einsatze eines Kollimators vor dem Faserende ein deutlich größeres Sichtfeld aufweist. Weiterhin können mittels eines offenen Faserendes die an einem Kollimator auftretenden chromatischen Aberrationen erfolgreich vermieden werden, da mittels des offenen Faserendes Emissionen unterschiedlicher Wellenlänge mit den gleichen Verhältnissen der Intensitäten aufgenommen werden. Dies ist weiterhin auch dann von Vorteil, wenn die von dem offenen Faserende aufgenommene Intensität wegen unterschiedlicher Abstände der Plasmen zu dem offenen Faserende schwankt. Dies kann aufgrund der teils komplexen Geometrien der Objekte nicht vermieden werden. Die unterschiedlichen Intensitäten können so dann aber bei Verwendung des offenen Faserendes eindeutig, insbesondere ohne eine Verfälschung der Intensitätsverhältnisse aufgenommen werden und / oder auch dann den unterschiedlichen Abständen zugeordnet werden. Das offene Faserende wird insbesondere derart nah zur Flugbahn der Objekte positioniert, dass die Emissionen das offene Faserende mit für eine genaue Messung ausreichend hoher Intensität erreichen.

In einer weiteren Ausgestaltung des Systems weisen der erste Analyselaser und / oder der zweite Laser, insbesondere der zweite Analyselaser, eine Pulswiederholrate auf. Der Wert dieser Pulswiederholrate in kHz entspricht einem bestimmten Wert der Geschwindigkeit der Objekte beim Verlassen des Zuführmittels in m/s multipliziert mit einem bestimmten Faktor, insbesondere einem Faktor von zumindest 15. Werden als Laser, insbesondere sowohl ein erster und ein zweiter Analyselaser verwendet, liegen die Pulswiederholraten insbesondere bei mindestens 20 kHz, insbesondere mindestens 45 kHz für mindestens einen oder für beide der jeweiligen Analyselaser. Wird als zweiter Laser ein Ablationslaser verwendet, so dass in Kombination ein erster Analyselaser und ein Ablationslaser verwendet wird, so liegt die Pulswiederholrate für den Ablationslaser bei insbesondere mindestens 45 kHz und für den ersten Analyselaser insbesondere zumindest bei 5 kHz oder auch entsprechend höher.

In einer weiteren Ausführungsform bzw. Ausgestaltung des Systems weist der erste Fokuspunkt des ersten Analyselasers und / oder der zweite Fokuspunkt des zweiten Lasers einen Fokuspunktdurchmesser von 0,1 mm bis 0,2 mm, insbesondere von 0,15 mm, auf.

Bei diesen Werten der Pulswiederholrate und diesen Werten der Fokuspunktdurchmesser tritt insbesondere auch eine Überlappung zweier aufeinander folgender Pulse auf. Eine etwaige Reinigung bzw. Vorablation der jeweiligen Objekte erfolgt dann zusätzlich auch mittels eines der jeweiligen Analyselasers, nämlich mittels eines vorrangehenden Pulses, wobei mittels des nachfolgenden Pulses die richtige und / oder korrekte Bestimmung des Materials des Objektes möglich ist.

In einer bevorzugten Ausführungsform des Systems weist der erste Analyselaser eine erste Linse zur Erzeugung des ersten Fokuspunktes und der zweite Laser eine zweite Linse zur Erzeugung des zweiten Fokuspunktes auf, wobei die erste Linse und die zweite Linse jeweils eine gleiche Brennweite, insbesondere von 250 mm bis 400 mm, aufweisen.

Um zu erreichen, dass der erste Fokuspunkt des ersten Analyselasers zum zweiten Fokuspunkt des zweiten Lasers beabstandet angeordnet ist, sind insbesondere auch die beiden Laser dann versetzt zueinander angeordnet. Letzteres ist aber nicht unbedingt notwendig, denkbar ist auch eine gleiche bzw. parallele Anordnung der Laser. Bei der Verwendung bspw. von Analyselasern gleicher Brennweite sind zwei baugleiche Analyselaser verwendbar, was auch Kostenvorteile bei der Beschaffung der Analyselaser nach sich zieht.

In einer alternativen Ausführungsform bzw. Ausgestaltung des Systems weist die erste Linse des ersten Analyselasers und die zweite Linse des zweiten Lasers eine voneinander abweichende Brennweite auf, insbesondere wobei ein Wert der Brennweite der zweiten Linse um 5% bis 10% kleiner oder größer ist als ein Wert der Brennweite der ersten Linse. Auf diese Weise sind die beiden Laser sehr nah aneinander anordnenbar und es ist trotzdem die Beabstandung der Fokuspunkte der beiden Laser zueinander erreichbar.

Der erste Analyselaser, der zweite Laser und das Spektrometer sind in einer ersten bevorzugten Ausführungsform bzw. Ausgestaltung des Systems oberhalb der Flugbahn der Objekte angeordnet. Die beiden Laser und das Spektrometer sind so besonderes nah an dem Ende des Zuführmittels und somit besonderes nah am Beginn der Flugbahn der Objekte anordnenbar.

Der erste Analyselaser, der zweite Laser und das Spektrometer sind in einer weiteren zweiten bevorzugten Ausführungsform bzw. Ausgestaltung des Systems unterhalb der Flugbahn der Objekte angeordnet. Bei der Anordnung der Laser unterhalb der Flugbahn der Objekte ist insbesondere aber auch von Vorteil, dass die Auflagepunkte der Objekte auf dem Fördermittel in einer Ebene liegen und dann damit zunächst auch der Abstand zu den jeweiligen Linsen, insbesondere der Abstand zur jeweiligen Linse des ersten Analyselasers sowie insbesondere - falls vorhanden- auch zum zweiten Analyselaser bzw. zum Ablationslaser bekannt ist. Weiterhin ist eine besonders kompakte Anordnung aller Bauteile des Systems ermöglicht.

Der erste Analyselaser und / oder der zweite Laser weist vorteilhafterweise jeweils eine Ausrichtungsvorrichtung auf. Mittels einer jeden Ausrichtungsvorrichtung ist die Ausrichtung des zugehörigen Lasers und somit der Ort des zugehörigen Fokuspunktes änderbar. Insbesondere ist die räumliche Anordnung der beiden Fokuspunkte des ersten Analyselasers und des zweiten Lasers zueinander und im Bezug zum Sichtfeld des Spektrometers änderbar, einstellbar und / oder anpassbar, je nach Anwendungsfall.

Auf diese Weise wird auch nochmals wiederum die Einsatzflexibilität des Systems erhöht. Die unterschiedlichen Anordnungen sind schnell einstellbar, insbesondere unter Umständen sogar während des Betriebs des Systems automatisch einstellbar. Die Ausrichtung der Laser zueinander und im Bezug zum Sichtfeld des Spektrometers je nach der jeweiligen Art der zu analysierenden Objekte kann aber vor der Aufnahme des Betriebs des Systems angepasst und / oder optimal eingestellt werden.

Insbesondere werden die Objekte aber auf dem Zuführmittel mittels eines weiteren Detektionsmittels/Sensors, z.B. einer Kamera erfasst, um deren Geometrie und / oder Größe und / oder Lage zu analysieren, insbesondere um die Sortiervorrichtung, insbesondere die Ausblasdüse und / oder die Laser optimal ansteuern zu können. Insbesondere kann dabei das Zuführmittel als ein im Querschnitt V-förmiges oder gewölbtes Förderband oder als V-förmige oder gewölbte Rutsche ausgebildet sein. Insbesondere ist mit dem Zuführmittel eine vereinzelte Zuführung von Objekten in den Messbereich bzw. in den Bereich der Fokuspunkte ermöglicht. Insbesondere ist bereits schon eine Vereinzelung der Objekte erfolgt bevor diese durch das Zuführmittel zugeführt werden. Insbesondere wenn das Zuführmittel als Förderband, insbesondere als ein im Querschnitt V-förmiges Förderband, ausgeführt ist, ist eine einzelne Zuführung der Objekte bzw. sind einzelne sequentiell nacheinander erfolgende Abwürfe der Objekte ab der Abwurfkante des Förderbandes ermöglicht, wobei aufgrund der zuvor ermittelten Lage des jeweiligen Objektes auf dem Förderband und der bekannten Geschwindigkeit des Förderbandes dann auch der erste und / oder zweite Analyselaser bzw. der Ablationslaser entsprechend angesteuert werden. In der sehr bevorzugten Ausführungsform bzw. Ausgestaltung des Verfahrens sind die Laser vor dem Betrieb des Systems bereits auf den Messbereich und / oder auf die erwartbare Flugbahn der Objekte ausgerichtet, insbesondere während der Ausführung des Verfahrens auch permanent aktiviert.

Denkbar in einer weiteren Ausführung und / oder Ausgestaltung ist aber auch, dass die Laser zueinander und im Bezug zum Sichtfeld des Spektrometers insbesondere auch automatisch über die Ansteuerung von Aktoren während des Betriebes ausgerichtet werden, insbesondere nachdem die Größe des zu analysierenden Objektes zuvor bereits erfasst und ermittelt worden ist.

Ein Winkel zwischen dem ersten Laserstrahl und dem zweiten Laserstrahl des ersten Analyselasers und dem zweiten Laser weist bevorzugterweise einen Wert von kleiner als 30°, insbesondere kleiner als 20°, auf. So sind insbesondere beide Laserstrahlen der Analyselaser mit einem geringen Winkel insbesondere zu einer Senkrechten des Spektrometers ausrichtbar. Die Senkrechte des Spektrometers bildet dabei insbesondere eine Symmetrieachse des Sichtfeldes des Spektrometers und steht insbesondere senkrecht auf dem offenen Faserende. So ist sichergestellt, dass die Emissionen der Plasmen der beiden Analyselaser mit ausreichender Intensität erfasst und vom Spektrometer analysiert werden können.

In einer sehr bevorzugten Ausführungsform bzw. Ausgestaltung des Systems ist das Zuführmittel insbesondere als ein angetriebenes Förderband ausgeführt. Denkbar ist auch, dass das Zuführmittel in einer weiteren Ausführungsform als eine Rutsche, insbesondere als eine im Querschnitt V-förmig oder gewölbt ausgebildete Rutsche ausgeführt ist.

Die Verwendung eines Förderbandes als Zuführmittel ist besonders vorteilhaft, da mittels eines Förderbandes die Analyse der Objekte weiter vereinfacht wird. Die Geschwindigkeit der Objekte ist nämlich aufgrund der bekannten, einstellbaren Förderbandgeschwindigkeit genau bekannt. Aufgrund der bekannten Geschwindigkeit des Förderbandes bzw. der Objekte ist dann z.B. auch die Überlappung der Einschusskrater der gepulsten Analyselaser bzw. des Ablationslasers bekannt, insbesondere kann die Überlappung auf einen für die Analyse der Objekte vorteilhaften Wert eingestellt werden.

Das Förderband ist in einer weiteren Ausführungsform bzw. Ausgestaltung des Systems im Wesentlichen horizontal ausgerichtet. Somit ist ein Rutschen/Verrutschen der Objekte auf dem Förderband vermieden. Mit dem Begriff "im Wesentlichen" ist in diesem Zusammenhang gemeint, dass von der horizontalen Ausrichtung in geringem Maße, z.B. um wenige Grad, insbesondere ≤ 10 Grad abgewichen werden kann, insbesondere wenn dann trotzdem ein Rutschen der Objekte auf dem Förderband vermieden ist.

Eine Rutsche als Zuführmittel kann auch vorteilhaft sein, weil bei der Verwendung einer Rutsche kein separater Antrieb und somit keine Energie notwendig ist, um die Objekte mittels des Zuführmittels zu bewegen. Die Bewegung auf der Rutsche erfolgt insbesondere dann allein aufgrund der Schwerkraft der Objekte.

In einer vorteilhaften weiteren Ausführungsform bzw. Ausgestaltung des Systems ist eine Sortiervorrichtung vorgesehen und / oder vorhanden. Die Objekte sind anhand der mittels des Spektrometers generierten Messdaten, insbesondere in Abhängigkeit eines bestimmten Materials der Objekte, in zumindest zwei unterschiedliche Kategorien, insbesondere mittels eines Luftstrahls, sortierbar, insbesondere gemäß der jeweiligen Kategorie dann aussortierbar. Durch diese Sortierung wird bspw. ein nachfolgendes Recycling der Objekte vereinfacht, da Objekte des gleichen Materials besser zu recyceln sind.

In einer Ausführungsform bzw. Ausgestaltung des Systems ist zumindest eine Steuereinheit und / oder ein Computer vorgesehen und / oder vorhanden. Die Steuereinheit und / oder der Computer ist insbesondere mit dem als Förderband ausgebildeten Zuführmittel, insbesondere mit dessen Antrieb zur Steuerung von dessen Geschwindigkeit, zu dessen Steuerung und / oder Regelung steuerungstechnisch wirksam verbunden. Die Steuereinheit und / oder der Computer ist mit dem ersten Analyselaser zu dessen Steuerung und / oder Regelung wirksam verbunden. Die Steuereinheit und / oder der Computer ist mit dem zweiten Laser zu dessen Steuerung und / oder Regelung wirksam verbunden. Die Steuereinheit und / oder der Computer ist mit dem Spektrometer steuerungstechnisch und / oder datentechnisch wirksam verbunden. Mittels der Steuereinheit und / oder dem Computer sind die mittels des Spektrometers generierten Messdaten auswertbar und insbesondere ist das jeweilige Material und / oder die jeweilige Materialzusammensetzung der Objekte bestimmbar. Insbesondere ist die Steuereinheit und / oder der Computer mit der Sortiervorrichtung zu deren Steuerung und / oder Regelung steuerungstechnisch wirksam verbunden. Zur Steuerung des ersten Analyselasers und / oder zur Steuerung des zweiten Lasers ist ein erstes und / oder ein zweites Steuermodul vorgesehen und / oder vorhanden. Insbesondere ist der erste Analyselaser und / oder der zweite Laser als ein LIBS-System oder als Teil eines LIBS-Systems ausgeführt und / oder ausgebildet. Insbesondere auch die optische Faser und / oder das offene Faserende und / oder das Spektrometer ist als Teil des LIBS-Systems ausgebildet und / oder ausgeführt. Die Steuermodule für die Laser können funktionstechnisch und / oder bauteiltechnisch als Teil der Steuereinheit und / oder des Computers ausgebildet sein, sind insbesondere dort als integrierte prozessuale Bestandteile vorhanden. Insbesondere die Steuereinheit und / oder der Computer) sind ebenfalls als Teil des LIBS-Systems ausgebildet.

Insbesondere sind weitere Detektionsmittel vorgesehen und / oder vorhanden, mit deren Hilfe die Geometrie und / oder Größe und / oder Lage der zugeführten Objekte auf dem Zuführmittel ermittelbar sind, insbesondere ist ein entsprechendes Kamerasystem vorgesehen und / oder steuerungstechnisch mit der Steuereinheit und / oder dem Computer wirksam verbunden ist.

Auf diese Weise ist eine Automatisierung des Systems ermöglicht und der manuelle Bedienaufwand des Systems ist minimierbar.

Das entsprechende System zum Analysieren und / oder Sortieren von Objekten, insbesondere das hier dann vorhandene Zuführmittel weist mindestens eine Zuführspur zur Zuführung der jeweiligen Objekte auf. In der sehr bevorzugten Ausführungsform bzw. sehr bevorzugten Ausgestaltung weist das Zuführmittel für das Zuführen und / oder Fördern der Objekte mehrere Zuführspuren auf, wobei dann jeder Zuführspur zumindest ein jeweiliger erster Analyselaser und ein jeweiliges Sichtfeld eines Spektrometers, insbesondere daher jeder Zuführspur eine jeweilige optische Faser mit einem offenen Faserende zugeordnet sind. Bei einer sehr bevorzugten Ausgestaltung ist jeder Zuführspur auch ein jeweiliges separates Spektrometer zugeordnet, insbesondere ist daher jede optische Faser mit einem dazugehörenden separaten Spektrometer verbunden. Die jeweiligen Zuführspuren können insbesondere auf dem Zuführmittel als physisch und / oder mechanisch getrennte Zuführspuren ausgebildet sein oder es können auch mehrere einspurige Zuführmittel vorgesehen sein. In einer bevorzugten Ausbildungsform bzw. Ausgestaltungsform ist das Zuführmittel als ein Förderband ausgebildet, das eine entsprechend große Breite aufweist, wobei auf diesem Förderband dann mehrere "virtuell" getrennte Zuführspuren ausgebildet sind, insbesondere durch im Vorfeld vorhandene entsprechende Vereinzelungsvorrichtungen, die über die jeweilige Breite des Förderbandes verteilt dann die Objekte dem Zuführmittel, insbesondere dem Förderband über dessen Breite verteilt zuführen, hierauf darf hingewiesen werden. Für den Fall, dass mehrere Zuführspuren vorhanden sind, beträgt der Abstand der jeweiligen ersten zueinander benachbarten Analyselaser bzw. der Abstand der jeweiligen zueinander benachbart angeordneten offenen Faserenden, insbesondere 20 bis 200 Millimeter, bevorzugt 50 bis 100 Millimeter. Noch mal anders ausgedrückt, der Abstand benachbarter Zuführspuren beträgt insbesondere 20 bis 200 Millimeter, bevorzugt 50 bis 100 Millimeter. Insbesondere für den Fall, dass mehrere Zuführspuren ausgebildet sind, weist die Sortiervorrichtung dann mehrere Ausblasdüsen auf, insbesondere weist die Sortiervorrichtung dann eine entsprechende Düsenleiste auf, die diese zuvor genannten Ausblasdüsen umfasst, hierbei ist dann jeder Zuführspur mindestens eine Ausblasdüse zugeordnet. Für den Fall, dass ein zweiter Laser, insbesondere ein zweiter Analyselaser oder ein Ablationslaser als zweiter Laser vorgesehen ist, ist dann auch jeder Zuführspur ein jeweiliger zweiter Laser zugeordnet. Die zuvor gemachten Ausführungen, insbesondere bezüglich der Abstände der dann benachbart zueinander angeordnet zweiten Laser geltend entsprechend analog, auch hierauf darf hingewiesen werden.

In einer weiteren bevorzugten Ausführungsform bzw. Ausgestaltung kann auch vorgesehen werden, dass die Objekte, die nicht oder nur unzureichend identifizierbar sind, mithilfe eines dann vorhandenen Rückführungssystems dann wieder dem Zuführmittel zuführbar sind. Das dann verwendete bzw. vorhandene Rückführungssystem weist insbesondere dann eine weitere Ausblasdüse bzw. eine weitere zweite Düsenleiste und / oder weitere Förderbänder auf, damit die zuvor genannten nicht oder nur unzureichend identifizierten Objekte, insbesondere dem Zuführmittel dann wiederrum für eine neue weitere Analyse zugeführt werden können bzw. entsprechend zugeführt werden.

Es gibt nun eine Vielzahl von Möglichkeiten, das erfindungsgemäße Verfahren zum Analysieren von Objekten bzw. das erfindungsgemäße System zum Analysieren von Objekten in vorteilhafter Art und Weise auszugestalten und weiterzubilden. Es darf hierzu zunächst auf die dem Patentanspruch 1 bzw. auf die dem Patentanspruch 16 nachgeordneten Patentansprüche verwiesen werden. Im Folgenden werden nun eine bevorzugte Ausgestaltung des erfindungsgemäßen Verfahrens zum Analysieren von Objekten und des erfindungsgemäßen Systems zum Analysieren von Objekten anhand der Zeichnung und der dazugehörigen Beschreibung näher erläutert bzw. beschrieben. In der Zeichnung zeigt:
- Fig.1: in stark vereinfachter schematischer Darstellung ein erstes Ausführungsbeispiel des Systems zum Analysieren von Objekten in einer Seitenansicht,
- Fig.2: in stark vereinfachter schematischer Darstellung ein zweites Ausführungsbeispiel des Systems zum Analysieren von Objekten in einer Seitenansicht,
- Fig.3: in stark vereinfachter schematischer Darstellung ein drittes Ausführungsbeispiel des Systems zum Analysieren von Objekten in einer Seitenansicht,
- Fig.4: in stark vereinfachter schematischer Darstellung ein viertes Ausführungsbeispiel des Systems zum Analysieren von Objekten in einer Seitenansicht,
- Fig.5: in stark vereinfachter schematischer Darstellung ein fünftes Ausführungsbeispiel des Systems zum Analysieren von Objekten in einer Seitenansicht,
- Fig.6: in stark vereinfachter schematischer Darstellung ein sechstes Ausführungsbeispiel des Systems zum Analysieren von Objekten in einer Seitenansicht,
- Fig.7: in einer stark vereinfachter schematischer Darstellung ein siebtes Ausführungsbeispiel des Systems zum Analysieren von Objekten in einer leicht perspektivischen Darstellung, wobei das hier in Figur 7 dargestellte System mehrere Zuführspuren zur Zuführung / zur Förderung der Objekte aufweist, und
- Fig.8: in stark vereinfachter schematischer Darstellung ein achtes Ausführungsbeispiel des Systems zum Analysieren von Objekten in einer leicht perspektivischen Darstellung, nahezu korrespondierend zu Figur 1, wobei das hier in Figur 8 dargestellte System mehrere Zuführspuren zur Zuführung / zur Förderung der Objekte aufweist.

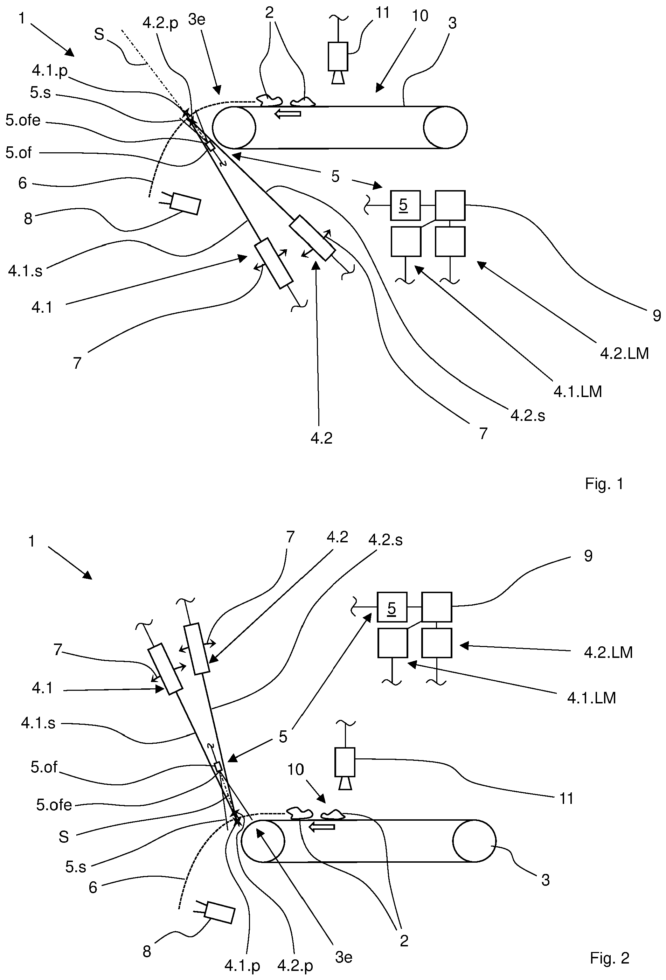

Fig.1 bis Fig.8 zeigen in stark vereinfachter schematischer Darstellung acht jeweilige Ausführungsbeispiele eines erfindungsgemäßen Systems 1 zum Analysieren von Objekten 2..

Die Fig. 1 bis 6 zeigen jeweilige Ausführungsformen bzw. Ausgestaltungen des Systems 1 in einer Seitenansicht im Wesentlichen mit der Darstellung von nur einer auf dem Zuführmittel 3 ausgebildeten Zuführspur 10 zur Zuführung der vereinzelten Objekte 2.

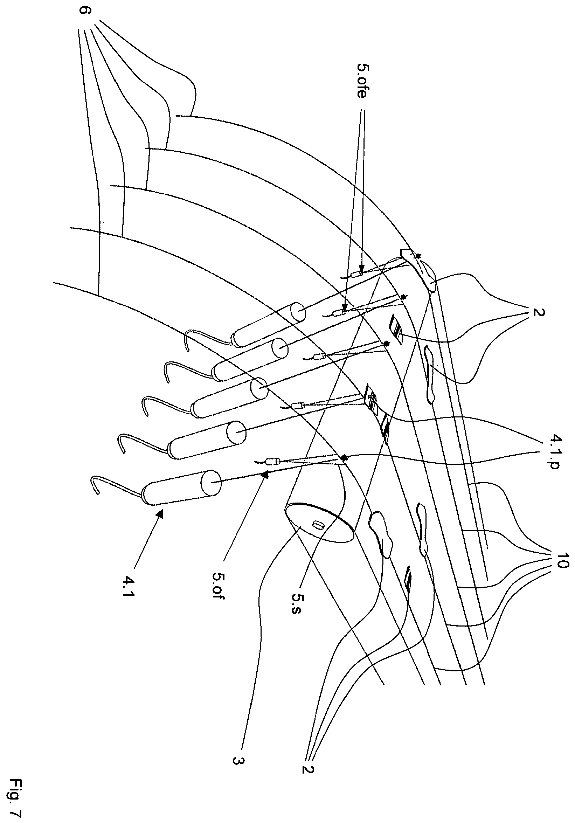

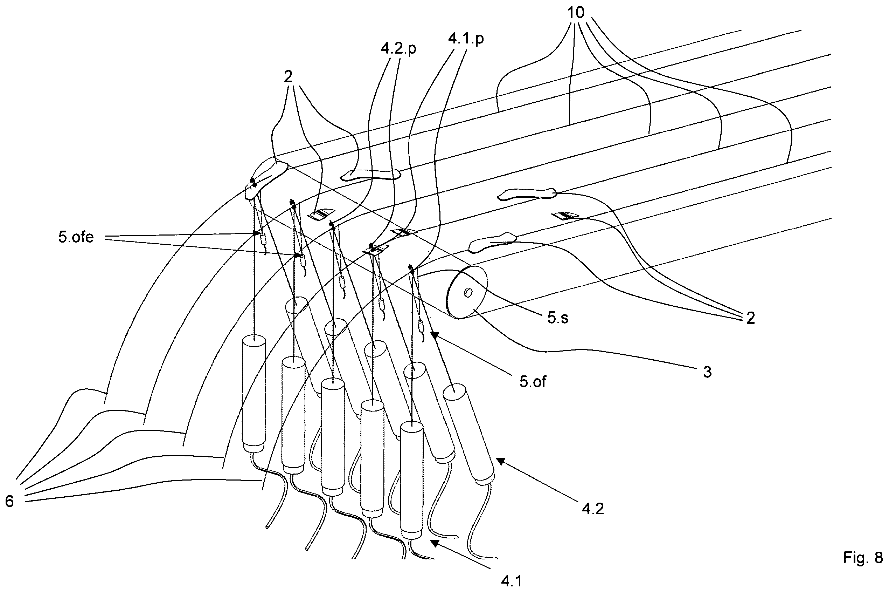

Die Fig. 7 und 8 zeigen in perspektivischer Darstellung im Wesentlichen teils auch wesentliche Komponenten des Systems 1, jedoch wobei hier mehrere Zuführspuren 10 erkennbar sind bzw. auf dem Fördermittel 3 hier mehrere Zuführspuren 10 ausgebildet sind. An dieser Stelle darf darauf hingewiesen werden, dass insbesondere in den Fig. 7 und 8 nicht alle Komponenten dargestellt sind, die beispielsweise in den Fig. 1 bis 6 dargestellt sind. Die entsprechenden Ausführungen, insbesondere zu den Fig. 1 bis 4, gelten entsprechend analog daher im Wesentlichen auch für die in den Fig. 7 und 8 dargestellten Ausführungsbeispiele, wo hier im Vergleich zu den Fig. 1 bis 6 nicht nur eine, sondern mehrere Zuführspuren 10 dargestellt sind, hierauf darf hingewiesen werden. Für gleiche bzw. ähnliche Bauteile werden in allen Figuren im Wesentlichen die gleichen Bezugszeichen verwendet.

Das nachfolgend beschriebene erfindungsgemäße Verfahren zum Analysieren und / oder Sortieren von Objekten 2 ist mit allen diesen in den Fig. 1 bis 8 dargestellten acht Ausführungsbeispielen im Wesentlichen umsetzbar.

Das hier in Fig. 1 bis Fig. 8 dargestellte System 1 bzw. das durch das System 1 realisierbare Verfahren ist für unterschiedliche Anwendungsarten geeignet. Mit diesem System 1 bzw. Verfahren können bestimmte unterschiedliche Objekte 2 analysiert und / oder sortiert, insbesondere aussortiert werden, wie bspw. Metallteile, Metallschrotte, insbesondere Aluminiumschrott, Erzbrocken, Batterien, Verpackungen, Abfall oder dergleichen. Das System 1 bzw. das Verfahren eignet sich daher insbesondere für die Trennung und / oder Sortierung von Metallstücken, die Recycling-Wirtschaft und / oder wird im Bereich des Bergbaus und beim Abbau von Erzen und / oder Mineralien eingesetzt. Eine Vielzahl von Anwendungen ist denkbar und möglich. Die sehr bevorzugte Anwendung ist insbesondere die Sortierung von Metallteilen und / oder von Aluminiumschrott. Insbesondere bei der Aussortierung bzw. Sortierung von Aluminiumschrott ist dann eine Sortierung / Selektion in die verschiedenen Klassen 1XXX - 8XXX gemäß der Norm DIN EN 573-3 bzw. DIN EN 573-4 sowie innerhalb dieser Klassen, bspw. zwischen 6005 und 6061 möglich. Die zuvor erwähnten "Klassen" können beispielsweise insbesondere dann die unterschiedlichen "Kategorien" zur Sortierung der Objekte 2 bilden.

Es ist zunächst zumindest ein Zuführmittel 3, ein - erster - Analyselaser 4.1 und zumindest ein Spektrometer 5 vorgesehen und / oder vorhanden. Die Objekte 2 werden mit Hilfe des Zuführmittels 3, insbesondere einem Messbereich / Analysebereich, zugeführt und / oder bewegt, insbesondere gefördert, wobei die Objekte 2 ab einem Ende 3e des Zuführmittels 3 zu deren Analyse sich auf einer Flugbahn 6 bewegen, insbesondere von dem Zuführmittel 3 abgeworfen werden, letzteres insbesondere dann, wenn das Zuführmittel als ein angetriebenes bzw. motorisch antreibbares Förderband ausgebildet ist

Mittels des - ersten - Analyselasers 4.1 wird ein - erster - Laserstrahl 4.1.s mit einem - ersten-Fokuspunkt 4.1.p erzeugt. Der Analyselaser 4.1 ist wird derart zu dem Zuführmittel 3 ausgerichtet, dass die Objekte 2 während ihrer jeweiligen Bewegung auf ihrer jeweiligen Flugbahn 6 den Laserstrahl 4.1.s im Bereich des Fokuspunktes 4.1.p durchfliegen. Ein Sichtfeld 5.s des Spektrometers 5 ist und / oder wird auf einen Bereich der Flugbahn 6 der Objekte 2 ausgerichtet. Der Fokuspunkt 4.1.p des Analyselasers 4.1 liegt daher im Sichtfeld 5.s des Spektrometers 5.

Mittels des Fokuspunktes 4.1.p des Analyselasers 4.1 werden Plasmen der Objekte 2 erzeugt. Emissionen dieser Plasmen werden mittels des Spektrometers 5 spektroskopisch analysiert.

Die eingangs genannten Nachteile sind nun zunächst dadurch vermieden, dass das Sichtfeld 5.s des Spektrometers 5 durch ein offenes Faserende 5.ofe einer optischen Faser 5.of realisiert ist. Die Emissionen der von dem Analyselaser 4.1 an den Objekten 2 erzeugten Plasmen werden mittels des offenen Faserendes 5.ofe aufgenommen.

Durch das offene Faserende 5.ofe werden zunächst Kosten gespart, denn das offene Faserende 5.ofe ist einfach und kostengünstig herstellbar. Der bisher im Stand der Technik verwendete Kollimator ist nicht notwendig. Insbesondere ist das offene Faserende 5.ofe unempfindlich gegenüber Ungenauigkeiten bei der Justierung des Spektrometers 5, insbesondere weist das offene Faserende 5.ofe gegenüber dem Einsatz eines Kollimators (wie bisher im Stand der Technik) ein deutlich größeres Sichtfeld auf. Durch die Realisierung des Sichtfeldes 5.s ausschließlich durch das offene Faserende 5.ofe der optischen Faser 5.of werden daher die eingangs genannten Vorteile erzielt und Nachteile vermieden.

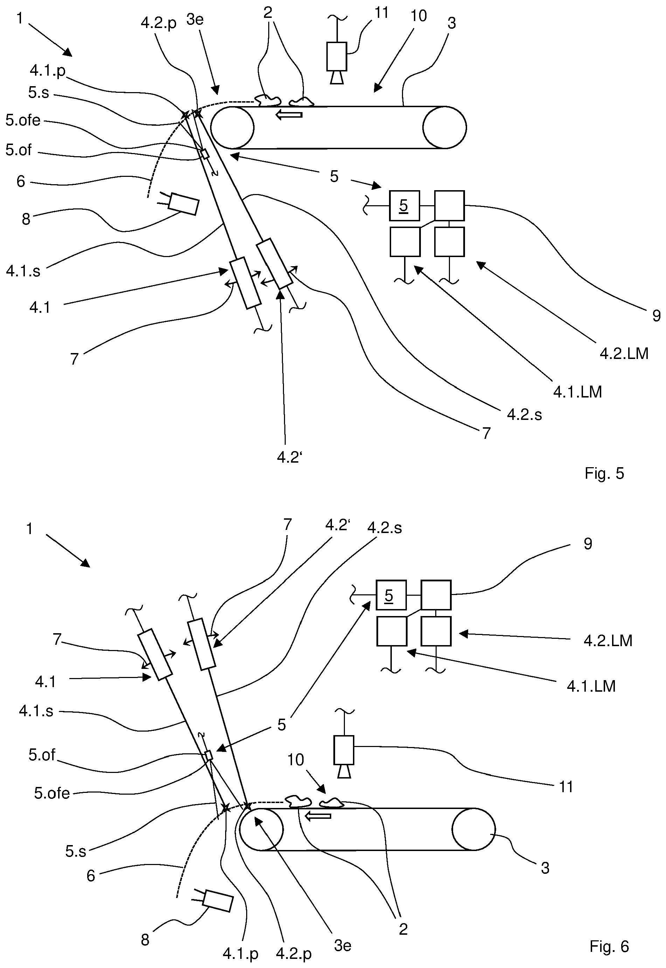

Im Folgenden dürfen nun die weiteren Ausführungen gemacht werden, die grundsätzlich zunächst für alle Fig.1 bis 8 gelten, allerdings mit dem Unterschied, dass der in den Fig.1 bis 4 und Fig. 8 dargestellte Laser 4.2 hier als ein Analyselaser 4.2 ausgebildet und / oder ausgeführt ist, wobei der in den Fig.5 und 6 dargestellte Laser 4.2' als Ablationslaser 4.2' ausgeführt ist. Dagegen zeigt Fig. 7 nur einen Laser, nämlich einen ersten Analyselaser 4.1, wohingegen bei allen übrigen Figuren zwei Laser, nämlich ein erster Analyselaser 4.1 und ein zweiter Laser, entweder ein zweiter Analyselaser 4.2 oder ein Ablationslaser 4.2' vorgesehen ist. Unter Berücksichtigung dieser Aspekte darf nun insbesondere zu den Fig.1 bis 8 Folgendes ausgeführt werden:
Mit Hilfe eines zweiten Lasers 4.2 bzw. 4.2'. insbesondere eines zweiten Analyselasers 4.2 oder eines Ablationslasers 4.2', wird ein zweiter Laserstrahl 4.2.s mit einem zweiten Fokuspunkt 4.2.p erzeugt. Auch der zweite Analyselaser 4.2 ist und / oder wird derart zu dem Zuführmittel 3 ausgerichtet, dass die Objekte 2 während ihrer jeweiligen Bewegung auf ihrer jeweiligen Flugbahn 6 den zweiten Laserstrahl 4.2.s im Bereich des zweiten Fokuspunktes 4.2.p durchfliegen. Der zweite Fokuspunkt 4.2.p des zweiten Lasers 4.2 bzw. 4.2' liegt bei den Ausführungsbeispielen gemäß den Fig.1 bis 4 und Fig. 8 im Sichtfeld 5.s des Spektrometers 5 bzw. bei den Ausführungsbeispielen gemäß Fig.5 und 6 außerhalb des Sichtfeldes 5.s des Spektrometers 5 (Fig. 7 zeigt einen -ersten- Analyselaser 4.1 pro Zuführspur 10).

Der erste Analyselaser 4.1 und der zweite Laser 4.2 bzw. 4.2' sind und / oder werden derart zueinander ausgerichtet, so dass der erste Fokuspunkt 4.1.p des ersten Analyselasers 4.1 zum zweiten Fokuspunkt 4.2.p des zweiten Lasers 4.2 bzw. 4.2' beabstandet ist. Mittels des ersten Fokuspunktes 4.1.p des ersten Analyselasers 4.1 und / oder mittels des zweiten Fokuspunktes 4.2.p des zweiten Analyselasers 4.2 werden Plasmen der Objekte 2 erzeugt. Emissionen dieser Plasmen werden dann mittels des Spektrometers 5 spektroskopisch analysiert.

Es ist denkbar, dass der Spektrometer 5 und der erste Analyselaser 4.1 und / oder der zweite Laser 4.2 bzw. 4.2' in einem gemeinsamen Gehäuse angeordnet sind, insbesondere sind der erste Analyselaser 4.1. und der zweite Laser 4.2 bzw. 4.2' sowie der Spektrometer 5 als ein LIBS-System ausgeführt bzw. sind entsprechende Bestandteile eines LIBS-Systems.

Der erste Analyselaser 4.1 und der zweite Analyselaser 4.2 werden insbesondere derart zueinander ausgerichtet, dass der erste Fokuspunkt 4.1.p des ersten Analyselasers 4.1 und der zweite Fokuspunkt 4.2.p des zweiten Analyselasers 4.2 auf einer im Wesentlichen Senkrechten S zur Flugbahn 6 der Objekte 2 beabstandet übereinander liegen. Hierbei bedeutet der Ausdruck "im Wesentlichen" insbesondere, dass die entsprechende virtuelle Verbindungslinie zwischen den beiden Fokuspunkten 4.1.p und 4.2.p auch eine Neigung von bis zu + / - 15 Grad, insbesondere von bis zu + / - 10 Grad, gegenüber der Senkrechten S aufweisen kann. Hierbei ist die "Senkrechte S" eine virtuelle Linie, die dann auf einer Tangentialen eines bestimmten und/oder ausgewählten Punktes der bekannten und/oder prognostizierten Flugbahn 6 der Objekte 2 senkrecht steht bzw. entsprechend senkrecht zu dieser Tangentialen ausgerichtet ist. Diese Situation ist in den Fig.1 und Fig.2 sowie Fig. 8 dargestellt, wobei die Senkrechte S aber nur in den Fig. 1 und 2 dargestellt ist.

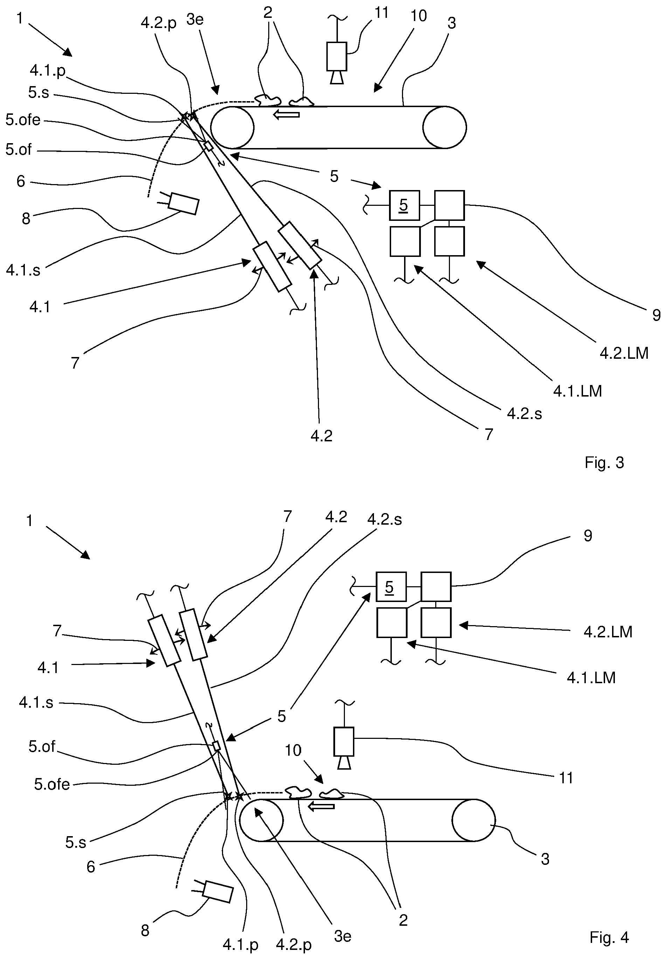

Der erste Analyselaser 4.1 und der zweite Laser 4.2 bzw. 4.2' können alternativ derart zueinander ausgerichtet werden, dass der erste Fokuspunkt 4.1.p des ersten Analyselasers 4.1 und der zweite Fokuspunkt 4.2.p des zweiten Lasers 4.2 bzw. 4.2' im Wesentlichen horizontal -in Förderrichtung der Objekte 2- nebeneinander liegen. Hierbei bedeutet der Ausdruck "im Wesentlichen" insbesondere, dass die entsprechende virtuelle Verbindungslinie zwischen den beiden Fokuspunkten 4.1.p und 4.2.p auch eine Neigung von bis + / - 10 Grad, insbesondere bis zu + / - 5 Grad, gegenüber der Horizontalen aufweisen kann. Hierbei umfasst der Begriff "im Wesentlichen horizontal in Förderrichtung der Objekte 2 nebeneinander liegen" nicht nur die ersten und zweiten Fokuspunkte, die horizontal nebeneinander angeordnet sind und direkt auch auf der Höhe der Abwurfkannte 3e des Zuführmittels 3 liegen, sondern umfasst auch die ersten und zweiten Fokuspunkte, die auf einer Horizontalen nebeneinander liegen, wobei die Horizontale dann ein bestimmten Höhenabstand zur Abwurfkante 3e aufweist bzw. parallel beabstandet zur Fläche eines Förderbandes in Förderrichtung verläuft. Diese Situation ist in den Fig.3, Fig.4, Fig.5 und Fig.6 und dargestellt.

In der bevorzugten Ausgestaltung liegen der erste Fokuspunkt 4.1.p des ersten Analyselasers 4.1 und der zweite Fokuspunkt 4.2.p des zweiten Lasers 4.2 bzw. 4.2' teils horizontal und teils vertikal beabstandet zueinander, sind insbesondere also voneinander mit einer vertikalen und horizontalen jeweiligen Abstandskomponente beabstandet. Insbesondere der erste Fokuspunkt liegt dann "schräg" unter oder "schräg" über dem zweiten Fokuspunkt (oder umgekehrt), insbesondere aber auf einer im Wesentlichen Senkrechten S zur Flugbahn 6 der Objekte 2 übereinander.

Das Spektrometer 5 weist nun eine optische Faser 5.of mit einem offenen Faserende 5.ofe auf bzw. ist nun eine optische Faser 5.of vorgesehen und / oder vorhanden, die ein offenes Faserende 5.ofe aufweist. Die Emissionen der von dem ersten Analyselaser 4.1 und / oder dem zweiten Analyselaser 4.2 an den Objekten 2 erzeugten Plasmen werden mittels des offenen Faserendes 5.ofe aufgenommen bzw. erfasst. Hierbei ist der Spektrometer 5 zumindest teilweise in den Figuren schematisch "kastenförmig" dargestellt, wobei durch Pfeile dann auch angedeutet ist, dass der Spektrometer 5 mit der optischen Faser 5.of entsprechend verbunden ist.

Das Sichtfeld 5.s des Spektrometers 5 ist somit durch das offene Faserende 5.ofe der optischen Faser 5.of realisiert. Ein Abstand zwischen dem offenen Faserende 5.ofe und dem Ende 3e des Zuführmittels 3, insbesondere der Abwurfkante des Zuführmittels 3, weist einen bestimmten Wert, insbesondere von weniger als 350 mm, insbesondere zwischen 50mm und 200 mm, auf. Hierbei wird dieser Abstand insbesondere zwischen dem offenen Faserende 5.ofe und dem "Abwurfpunkt" des Objektes 2 vom Zuführmittel 3 gemessen bzw. dem Beginn der Flugbahn 6 des Objektes 2.

Das offene Faserende 5.ofe weist eine numerische Apertur mit einem Wert von 0,14 bis 0,28, insbesondere von 0,18 bis 0,24, auf. Ein voller Öffnungswinkel des offenen Faserendes 5.ofe liegt insbesondere im Bereich zwischen 15 und 50 Grad, insbesondere im Bereich 20 bis 30 Grad.

Die optische Faser 5.of ist als "Stufenindex-Faser", insbesondere als Multimode-Faser, ausgeführt.

Die optische Faser 5.of weist insbesondere einen Quarzglaskern und eine Ummantelung auf. Insbesondere weist die Ummantelung eine äußere Acrylat-Ummantelung und eine Fluor-dotierte Zwischenschicht auf.

Die optische Faser 5.of weist einen Kerndurchmesser mit einem Wert von 50 µm bis 700 µm, insbesondere von 400 µm bis 600 µm, auf.

Mittels des ersten Analyselasers 4.1 und / oder mittels des zweiten Lasers 4.2 bzw. 4.2' werden Pulse mit einer bestimmten Pulswiederholrate emittiert. Der Wert dieser Pulswiederholrate in kHz entspricht insbesondere einem bestimmten Wert der Geschwindigkeit der Objekte 2 beim Verlassen des Zuführmittels 3 in m/s multipliziert mit einem bestimmten Faktor, insbesondere einem Faktor von zumindest 15. Für den Fall, dass nur ein erster Analyselaser 4.1 in den jeweiligen Ausführungsbeispielen (hier insbesondere Fig.7) verwendet wird, weist der erste Analyselaser 4.1 insbesondere eine Pulswiederholrate von mindestens 20 kHz, insbesondere von mindestens 45 kHz auf. Für den Fall, dass in Kombination ein erster Analyselaser 4.1 mit einem zweiten Analyselaser 4.2 verwendet wird, weisen diese beiden Laser ebenfalls insbesondere die zuvor genannten Pulswiederholraten auf. Schließlich, wenn ein erster Analyselaser 4.1 in Kombination mit einem Ablationslaser 4.2' verwendet wird (vgl. insbesondere Fig. 5 und 6), weist der Ablationslaser 4.2' insbesondere eine Pulswiederholrate von insbesondere mindestens 45 kHz auf, wobei der erste Analyselaser 4.1 dann zumindest eine Pulswiederholrate von 5 kHz oder auch mehr aufweisen kann bzw. aufweist.

Insbesondere sind der erste Analyselasers 4.1 und der zweite Analyselasers 4.2 baugleich ausgeführt. Insbesondere können diese auch gemeinsam mit anderen Komponenten des LIBS-Systems in einem gemeinsamen Gehäuse verbaut sein.

Bei dem in den Fig.5 und 6 gezeigten Ausführungsbeispiel, ist der hier dargestellte zweite Laser ist insbesondere als Ablationslaser 4.2' ausgeführt und ist insbesondere auch als Bestandteil des LIBS-Systems ausgebildet. Auch dieser zweite Laser 4.2 bzw. 4.2' der Fig.5 und 6 kann daher in einem gemeinsamen Gehäuse mit dem ersten Analyselaser 4.1 verbaut sein.

Der erste Analyselaser 4.1 und / oder der zweite Laser 4.2 bzw. 4.2'weisen insbesondere eine Ausrichtungsvorrichtung 7 auf. Bei Bedarf wird mittels einer jeden Ausrichtungsvorrichtung 7 die Ausrichtung des zugehörigen Analyselasers 4.1, 4.2 bzw. des Ablationslasers 4.2' und somit der Ort des zugehörigen Fokuspunktes 4.1.p, 4.2.p geändert, eingestellt und / oder angepasst. Insbesondere wird die räumliche Anordnung der beiden Fokuspunkte 4.1.p, 4.2.p des ersten Analyselasers 4.1 und des zweiten Lasers 4.2 bzw. 4.2' zueinander und im Bezug zum Sichtfeld 5.s des Spektrometers 5 geändert.

Die Ausrichtungsvorrichtungen 7 werden hier in den Fig.1 bis 6 mit Hilfe an die Analyselaser 4.1, 4.2 bzw. an den zweiten Laser 4.2 bzw. 4.2' angrenzenden Pfeilen symbolisiert. Es ist denkbar, dass nur einer der beiden Analyselaser 4.1 oder 4.2 oder der Ablationslaser 4.2' eine Ausrichtungsvorrichtung 7 aufweist. Ebenso kann jeder Laser jeweils eine Ausrichtungsvorrichtung 7 aufweisen. Weiterhin ist denkbar, dass nur eine Ausrichtungsvorrichtung 7 vorgesehen und / oder vorhanden ist, wobei diese eine Ausrichtungsvorrichtung 7 aber dann dazu dient, beide Analyselaser 4.1 und 4.2 bzw. den ersten Analyselaser 4.1 und den Ablationslaser 4.2' zu bewegen und auszurichten.

Bei einer bevorzugten Ausführungsform bzw. Ausgestaltung des Systems 1 bzw. des Verfahrens werden der erste Analyselaser 4.1 und der zweite Laser 4.2 bzw. 4.2' vor dem Analyse- und / oder Sortiervorgang ausgerichtet, insbesondere unter Berücksichtigung der Struktur und / oder Geometrie und / oder der zu erwartenden Größe der zu analysierenden und / oder zu sortierenden Objekte 2. Eine Ausrichtung des ersten und / oder zweiten Analyselasers 4.1 und 4.2 bzw. des Ablationslasers 4.2' während der Ausführung des Verfahrens ist dann nach einmaliger optimierter Ausrichtung nicht mehr unbedingt notwendig.

Denkbar ist aber, dass die Ausrichtung des ersten Analyselasers und des zweiten Lasers 4.2 bzw. 4.2' auch während des Verfahrens insbesondere dann automatisch erfolgt, insbesondere dann, wenn über vorgesehene weitere Detektionsmittel 11, insbesondere ein Kamerasystem, eine andere, insbesondere unerwartete, komplexere Struktur, Geometrie und / oder Größe der zu analysierenden und / oder zu sortierenden Objekte 2 auf dem Zuführmittel 3 ermittelt wird, die außerhalb des erwarteten Toleranzbereichs der zu analysierenden und / oder zu sortierenden Objekte 2 liegt.

Weiterhin könnte auch das Spektrometer 5 selbst analog eine Ausrichtungsvorrichtung aufweisen. Es sind daher verschiedene Arten von Ausrichtungsvorrichtungen 7 bspw. mit entsprechenden Aktoren denkbar, wobei solche Aktoren dann auch automatisiert ansteuerbar sind.

Insbesondere sind die Analyselaser 4.1 und / oder 4.2 bzw. der Ablationslaser 4.2' mittels der Ausrichtungsvorrichtungen 7 um eine Achse, insbesondere im Wesentlichen senkrecht zur Bewegungsrichtung der Objekte 2bzw. um eine Achse drehbar, die parallel zu der Achse einer nicht näher bezeichneten Umlenkrolle des Förderbandes verläuft, und / oder in einer durch die Flugbahn 6 der Objekte 2 verlaufenden Ebene verschiebbar.

In der bevorzugten Ausführungsform bzw. Ausgestaltung werden der erste Analyselaser 4.1 und der zweite Laser 4.2 bzw. 4.2' insbesondere auch das Spektrometer 5 manuell ausgerichtet, insbesondere zum Beispiel in entsprechend zugehörigen Langlochaufnahmen eines Gestells, insbesondere mithilfe von Schraubverbindungen, dann entsprechend fixiert und ausgerichtet. Dies erfolgt insbesondere vor der Betriebsaufnahme des Systems 1 bzw. vor der Durchführung des Verfahrens.

Es ist eine Sortiervorrichtung 8 vorgesehen und / oder vorhanden. Die Objekte 2 werden anhand der mittels des Spektrometers 5 generierten Messdaten, insbesondere in Abhängigkeit eines bestimmten Materials der Objekte 2, in zumindest zwei unterschiedliche Kategorien, insbesondere mittels eines Luftstrahls, sortiert. Die Sortiervorrichtung 8 weist daher insbesondere mindestens eine entsprechend ansteuerbare Ausblasdüse auf.

Je Kategorie ist dabei insbesondere ein Behälter vorgesehen, in welchen die Objekte 2 gesammelt werden und mittels welcher die Objekte 2 einer Weiterverarbeitung, zum Beispiel einem Recycling der Objekte 2 dann zugeführt werden können. Derartige Behälter oder Behältnisse oder auch weitere hierfür denkbare Fördermittel zum Abtransport sind hier in den Fig. 1 bis 8 nicht weiter dargestellt.

Es ist zumindest eine Steuereinheit 9 und / oder ein Computer 9 vorgesehen und / oder vorhanden. Insbesondere das als Förderband ausgebildete Zuführmittel 3, insbesondere dessen Geschwindigkeit, wird mittels der Steuereinheit 9 und / oder dem Computer 9 gesteuert und / oder geregelt. Der erste Analyselaser 4.1 wird mittels der Steuereinheit 9 und / oder dem Computer 9 gesteuert und / oder geregelt. Der zweite Laser 4.2 bzw. 4.2' wird mittels der Steuereinheit 9 und / oder dem Computer 9 gesteuert und / oder geregelt. Das Spektrometer 5 wird mittels der Steuereinheit 9 und / oder dem Computer 9 gesteuert und / oder geregelt bzw. ist mit der Steuereinheit 9 und / oder dem Computer 9 datentechnisch wirksam verbunden. Mittels der Steuereinheit 9 und / oder des Computers 9 werden die mittels des Spektrometers 5 generierten Messdaten ausgewertet, wobei insbesondere das jeweilige spezifische Material, bspw. ein spezifisches Metall oder ein Kunststoff, der jeweiligen Objekte 2 bestimmt wird.

Insbesondere wird auch die Sortiervorrichtung 8 mittels der Steuereinheit 9 und / oder dem Computer 9 gesteuert und / oder geregelt, insbesondere wird eine Ausblasdüse der Sortiervorrichtung 8 entsprechend ansteuert. Insbesondere weist daher die Sortiervorrichtung 8 eine Ausblasdüse auf, ist insbesondere als eine Düsenleiste mit mehreren Ausblasdüsen ausgebildet.

Zur Steuerung des ersten Analyselasers 4.1 und zur Steuerung des zweiten Lasers 4.2 bzw. 4.2' sind ein erstes und / oder zweites Steuermodul 4.1.LM und 4.2.LM) vorgesehen und / oder vorhanden. Hierbei sind der erste Analyselaser 4.1 und der zweite Laser 4.2 bzw. 4.2' insbesondere als ein LIBS-System oder als Teil eines LIBS-Systems ausgeführt und / oder ausgebildet. Insbesondere die optische Faser (5.of) und / oder das offene Faserende (5.ofe) sowie das Spektrometers (5) sind auch als Teil des LIBS-Systems ausgebildet und / oder ausgeführt bzw. wird durch die zuvor genannten Komponenten ein LIBS-System gebildet und daher auch die Objekte 2 durch ein LIBS-Verfahren analysiert und auf Basis der ermittelten Messdaten sortiert, insbesondere teils aussortiert.

Die Steuermodule 4.1.LM und 4.2.LM für die jeweiligen Laser sind funktionstechnisch und / oder bauteiltechnisch insbesondere auch als Teil der Steuereinheit und / oder des Computers 9 ausgeführt, insbesondere ist auch die Steuereinheit und / oder der Computer 9 als Teil bzw. weitere Komponente des LIBS-Systems ausgebildet.

In der bevorzugten Ausführungsform bzw. Ausgestaltung sind weitere Detektionsmittel 11 vorgesehen und / oder vorhanden, mit deren Hilfe die Geometrie und / oder Größe und / oder Lage der zugeführten Objekte 2 auf dem Zuführmittel 3 ermittelbar sind, insbesondere ist ein entsprechendes Kamerasystem vorgesehen bzw. vorhanden und / oder steuerungstechnisch mit der Steuereinheit und / oder dem Computer 9 wirksam verbunden.

Insbesondere werden alle Komponenten des System 1 mittels der Steuereinheit 9 und / oder dem Computer 9 gesteuert und / oder geregelt, wobei eine Optimierung des Systems 1 durch die Berücksichtigungen der Abhängigkeiten der verschiedenen Komponenten untereinander einfach durchzuführen ist.

In den Fig. 1 bis 8 ist jeweils eine steuerungstechnisch wirksame Verbindung und / oder eine Datenverbindung zwischen dem Spektrometer 5, den beiden Analyselasern 4.1 und 4.2 bzw. dem Ablationslaser 4.2' und der Steuereinheit 9 und / oder dem Computer 9 mittels jeweils einer Linie, die aber nur teilweise dargestellt bzw. teils unterbrochen dargestellt ist, erkennbar bzw. schematisch angedeutet. Es ist theoretisch aber auch denkbar, dass die jeweiligen Komponenten separat gesteuert und / oder geregelt werden, z.B. mittels separater weiterer Steuereinheiten und / oder Computer.

In den Fig. 1 bis 8 sind -zumindest teilweise- das Spektrometer 5 und die beiden Analyselaser 4.1 und 4.2 bzw. der Ablationslaser 4.2' jeweils mittels mehrerer schematischer Elemente dargestellt, wobei eine Verbindung zwischen diesen jeweiligen Elementen z.B. zur Übertragung von Daten und / oder Energie insbesondere mittels jeweils hier dann dargestellter, teils unterbrochener Linien symbolisiert ist.

Bezüglich der Darstellung in den Fig. 1 bis 4 und Fig. 8 darf auch auf folgendes hingewiesen werden:
In der bevorzugten Ausführungsform sind der erste und zweite Analyselaser 4.1 und 4.2 und /oder die für den ersten und zweiten Analyselaser 4.1 und 4.2 vorhandenen Steuermodule 4.1.LM bzw. 4.2.LM als Teil eines LIBS-Systems ausgebildet. Nochmal anders ausgedrückt, der erste und zweite Analyselaser 4.1 und 4.2 ist insbesondere als jeweiliger LIBS-Analyselaser ausgebildet, wobei das LIBS-System auch insbesondere die optische Faser 5.of sowie die Steuerungsmodule 4.1.LM bzw. 4.2.LM aufweist. Zu dem LIBS-System gehört insbesondere das Spektrometer 5 und insbesondere auch die Steuereinheit und / oder der Computer 9. Teile dieser zuvor genannten Komponenten, insbesondere der erste und zweite Analyselaser 4.1 und 4.2 sowie ein Teil der optischen Faser 5.of mit dem offenen Faserende 5.ofe können hierbei insbesondere in einem gemeinsamen Gehäuse verbaut und / oder angeordnet sein, auch hierauf darf hingewiesen werden.

Die zuvor gemachten Ausführungen gelten für die Ausführungsbeispiele der Fig.5 und 6 im Wesentlichen analog, wobei hier der zweite Laser als Ablationslaser 4.2' ausgebildet und ausgeführt ist. Auch die hier in den Fig.5 und 6 dargestellten Laser, also hier der erste Analyselaser 4.1 und der zweite Laser 4.2', also der Ablationslaser, sind insbesondere als Teil des LIBS-Systems ausgebildet.

Fig.7 zeigt einen jeweiligen Analyselaser 4.1 und ein jeweiliges offenes Faserende 5.ofe, insbesondere für eine jeweilige Zuführspur 10, also jeweils einen Analyselaser 4.1 und einen jeweiliges offenes Faserende 5.ofe pro Zuführspur 10. Hier in Fig.7 (und Fig.8) sind nicht alle Komponenten dargestellt, jedoch gelten die oben gemachten Ausführungen im Wesentlichen analog, wobei insbesondere auch hier in Fig.7 die Vielzahl der Zuführspuren 10 auf dem Fördermittel 3 erkennbar und der hier verwendete erste Analyselaser 4.1 und die jeweiligen offenen Faserenden 5.ofe als Teil eines LIBS-Systems ausgebildet und / oder ausgebildet sind, wie zuvor bereits beschrieben.

Im Folgenden wird nun nochmal auf das System 1 zum Analysieren von Objekten 2 gemäß den acht unterschiedlichen Ausführungsbeispielen des System 1 aus den Fig.1 bis Fig. 8 nochmal näher eingegangen bzw. dieses nochmals näher beschrieben:
Das System 1 zum Analysieren von Objekten 2 dient insbesondere zur Durchführung des oben beschriebenen Verfahrens.

Das System 1 zum Analysieren von Objekten 2 weist das Zuführmittel 3, den - ersten - Analyselaser 4.1 und das Spektrometer 5 auf. Das Zuführmittel 3 ist insbesondere auch als "Fördermittel" bezeichnenbar. Die Objekte 2 sind mit Hilfe des Zuführmittels 3, insbesondere einem entsprechenden Messbereich bzw. Analysebereich nach dem Ende des Zuführmittels zuführbar bzw. dorthin bewegbar, insbesondere mit Hilfe eines als Förderband ausgebildeten Zuführmittels 3 förderbar.

Hierbei ist das Zuführmittel 3 insbesondere so ausgebildet, dass eine Vereinzelung der Objekte 2 erfolgen kann und / oder die Objekte 2 jeweils vereinzelt nacheinander ab dem Ende 3e des Zuführmittels 3 sich zunächst bis in einen Messbereich bzw. Analysebereich auf einer/ihrer jeweiligen Flugbahn 6 bewegen.

Insbesondere kann das Zuführmittel 3 einen V-förmigen Querschnitt zur Realisierung der Vereinzelung der Objekte 2 und / oder für die Realisierung eines vereinzelten Transportes der Objekte 2 aufweisen. Das Zuführmittel 3 ist daher insbesondere als ein im Querschnitt V-förmiges oder gewölbtes Förderband ausgeführt. Denkbar ist als Alternative auch eine im Querschnitt V-Förmig oder gewölbt ausgebildete Rutsche.

Ab dem Ende 3e, insbesondere ab einer Abwurfkante, des Zuführmittels 3 werden die Objekte 2 zu deren Analyse auf einer Flugbahn 6 bewegt, insbesondere werden die Objekte 2 vom Zuführmittel 3 abgeworfen und bewegen sich dann auf und / oder entlang einer Flugbahn 6.

Mittels eines - ersten - Analyselasers 4.1 ist ein - erster - Laserstrahl mit einem - ersten-Fokuspunkt 4.1.p erzeugbar. Der Analyselaser 4.1 ist derart zu dem Zuführmittel 3 ausgerichtet, dass die Objekte 2 während ihrer jeweiligen Bewegung auf ihrer jeweiligen Flugbahn 6 den Laserstrahl 4.1.s im Bereich des Fokuspunktes 4.1.p durchfliegen.

Das Spektrometer 5 weist das Sichtfeld 5.s auf. Das Sichtfeld 5.s des Spektrometers 5 ist auf einen Bereich der Flugbahn 6 der Objekte 2 ausgerichtet.

Das Sichtfeld 5.s des Spektrometers 5 ist nun durch das offene Faserende 5.ofe der optischen Faser 5.of realisiert.

Der erste Fokuspunkt 4.1.p des ersten Analyselasers 4.1 ist im Sichtfeld des Spektrometers 5 angeordnet, dies gilt hier für alle Ausführungsbeispiele der Fig.1 bis 8.

Es ist nun ein zweiter Laser 4.2 in den Fig.1 bis 6 und Fig.8 vorgesehen und / oder vorhanden. Der zweite Laser 4.2 bzw. 4.2' ist nun in den Ausführungsbeispielen der Fig.1 bis 4 und Fig.8 als ein zweiter Analyselaser 4.2 und in den Ausführungsbeispielen der Fig.5 und 6 als ein Ablationslaser 4.2' ausgeführt. Mittels des zweiten Lasers 4.2 bzw. 4.2' ist ein zweiter Laserstrahl 4.2.s mit einem zweiten Fokuspunkt 4.2.p erzeugbar. Auch der zweite Laser 4.2 bzw. 4.2' ist derart zu dem Zuführmittel 3 ausgerichtet, dass die Objekte 2 während ihrer jeweiligen Bewegung auf ihrer jeweiligen Flugbahn 6 den zweiten Laserstrahl 4.2.s im Bereich des zweiten Fokuspunktes 4.2.p durchfliegen.

Der zweite Fokuspunkt 4.2.p des zweiten Lasers 4.2, insbesondere des zweiten Analyselasers 4.2 bei den Fig. 1 bis 4 und Fig.8, ist im Sichtfeld 5.s des Spektrometers 5 angeordnet.

Bei den Ausführungsbeispielen der Fig.5 und 6 ist hier ein erster Analyselaser 4.1 und ein zweiter Laser, der als Ablationslaser 4.2' ausgeführt ist, vorgesehen. Im Wesentlichen gelten die obigen Ausführungen analog, mit der Ausnahme, dass der zweite Fokuspunkt 4.2.s des zweiten Lasers 4.2 in den Fig.5 und 6 außerhalb des Sichtfeldes 5.s liegt.

Bei dem in Fig.7 dargestellten Ausführungsbeispiel ist hier ein jeweiliger -erster- Analyselaser 4.1 vorgesehen, der hier den jeweiligen Zuführspuren 10 zugeordnet ist. Fig.7 zeigt daher mehrere Analyselaser 4.1 benachbart zueinander angeordnet und mehrere benachbart zueinander angeordnete optische Fasern 5.of bzw. optische Faserenden 5.ofe, die jeweils den jeweiligen Zuführspuren 10 zugeordnet sind. Fig.8 zeigt einen ersten Analyselaser 4.1 und einen zweiten Analyselaser 4.2 für jede Zuführspur 10. Hier sind daher auch mehrere Laser 4.1 / 4.2 bzw. optische Fasern 5.of und Zuführspuren 10 vorhanden bzw. ausgebildet, wobei jeder Zuführspur 10 mindestens ein erster und zweiter Analyselaser 4.1 und 4.2 sowie ein optisches Faserende 5.ofe zugeordnet ist. Es darf an dieser Stelle nochmal darauf hingewiesen werden, dass insbesondere die Ausführungsbeispiele der Fig. 7 und 8 nicht alle entsprechenden Komponenten zeigen, die beispielsweise in den Fig. 1 bis 4 dargestellt sind. Dennoch sind diese entsprechenden Komponenten analog bei den Fig. 7 und 8 auch entsprechend dann vorgesehen bzw. vorhanden, hierauf darf nochmals hingewiesen werden.

Der erste Analyselaser 4.1 und der zweite Analyselaser 4.2 sind bei den Fig.1 bis 4 sowie Fig.8 derart zueinander ausgerichtet, dass der erste Fokuspunkt 4.1.p des ersten Analyselasers 4.1 zum zweiten Fokuspunkt 4.2.p des zweiten Analyselasers 4.2 beabstandet angeordnet ist. Mittels des ersten Fokuspunktes 4.1.p des ersten Analyselasers 4.1 und / oder mittels des zweiten Fokuspunktes 4.2.p des zweiten Analyselasers 4.2 sind Plasmen der Objekte 2 erzeugbar. Die Emissionen dieser Plasmen sind mittels des Spektrometers 5 spektroskopisch analysierbar. Der erste Analyselaser 4.1 und der zweite Analyselaser 4.2 sind insbesondere derart zueinander ausgerichtet, dass der erste Fokuspunkt 4.1.p des ersten Analyselasers 4.1 und der zweite Fokuspunkt 4.2.p des zweiten Analyselasers 4.2 insbesondere auf einer im Wesentlichen Senkrechten S zu der Flugbahn 6 der Objekte 2 beabstandet übereinander angeordnet sind. Diese Situation ist in den Fig.1 und Fig.2 sowie Fig.8 dargestellt, wobei die Senkrechte S nur in den Fig. 1 und 2 dargestellt ist.

Der erste Analyselaser 4.1 und der zweite Analyselaser 4.2 sind alternativ derart zueinander ausgerichtet, dass der erste Fokuspunkt 4.1.p des ersten Analyselasers 4.1 und der zweite Fokuspunkt 4.2.p des zweiten Analyselasers 4.2 im Wesentlichen horizontal in Förderrichtung der Objekte 2 nebeneinander angeordnet sind. Diese Situation ist in den Fig.3 und Fig.4 dargestellt. In den Fig.5 und 6 sind die Fokuspunkte der dortigen Laser 4.1.p und 4.2.p auch im Wesentlichen horizontal in Förderrichtung der Objekte 2 nebeneinanderliegend angeordnet, allerdings ist hier der zweite Laser als Ablationslaser 4.2' ausgeführt, wobei der entsprechende Fokuspunkt 4.2.p außerhalb des Sichtfeldes 5.s der optischen Faser 5.ofe liegt, auch hierauf darf an dieser Stelle nochmals hingewiesen werden.

In der sehr bevorzugten Ausgestaltung sind der erste Fokuspunkt 4.1.p des ersten Analyselasers 4.1. und der zweite Fokuspunkt 4.2.p des zweiten Analyselasers 4.2 insbesondere teils vertikal, teils horizontal zueinander positioniert, insbesondere also mit entsprechenden horizontalen und / oder vertikalen Abständen zueinander entsprechend beabstandet, oder einfach ausgedrückt, die Fokuspunkte liegen dann schräg versetzt zueinander, insbesondere auf einer im Wesentlichen Senkrechten S zur Flugbahn 6 der Objekte 2 liegen Auch hierauf darf hingewiesen werden.

Die obigen Ausführungen zu den Fig.1 bis 4 gelten im Wesentlichen analog zu den Fig.5 bis 6 mit der Maßgabe, dass hier der zweite Laser eben nicht als Analyselaser ausgeführt ist, sondern als Ablationslaser 4.2', wobei hier dann die beiden Fokuspunkte, also der erste Fokuspunkt 4.1.s des ersten Analyselasers 4.1 und der zweite Fokuspunkt 4.2.s des zweiten Lasers, nämlich des Ablationslaser 4.2' im Wesentlichen horizontal -in Förderrichtung der Objekte 2 betrachtetbeabstandet zueinander sind, so wie in den Fig.5 und 6 dargestellt und wobei der zweite Fokuspunkt 4.2.p aber außerhalb des Sichtfeldes 5.s liegt. Die durch den Ablationslaser 4.2' erzeugten Plasmen werden daher nicht durch das Spektrometer 5 analysiert, denn nur die durch den ersten Analyselaser 4.1 erzeugten Plasmen bzw. die hieraus resultierenden Emissionen erreichen über das offene Faserende 5.ofe die Sensoren des Spektrometers 5.

Das Spektrometer 5 weist nun die optische Faser 5.of mit dem offenen Faserende 5.ofe bzw. ist nun eine optische Faser 5.of vorgesehen und / oder vorhanden, die insbesondere ausschließlich ein offenes Faserende 5.ofe zur Aufnahme der Emissionen der von dem ersten Analyselaser 4.1 und / oder dem zweiten Analyselaser 4.2 an den Objekten 2 erzeugten Plasmen aufweist.

Der erste Analyselaser 4.1 und / oder der zweite Laser 4.2 bzw. 4.2' weisen eine Pulswiederholrate auf. Der Wert dieser Pulswiederholrate in kHz entspricht insbesondere einem bestimmten Wert der Geschwindigkeit der Objekte 2 beim Verlassen des Zuführmittels 3 in m/s multipliziert mit einem bestimmten Faktor, insbesondere einem Faktor von zumindest 15.

Der erste Fokuspunkt 4.1.p des ersten Analyselasers 4.1 und / oder der zweite Fokuspunkt 4.2.p des zweiten Lasers 4.2 bzw. 4.2' weist einen Fokuspunktdurchmesser von 0,1 mm bis 0,2 mm, insbesondere von 0,15 mm, auf. Der jeweilige Fokuspunktdurchmesser wird dabei senkrecht zum jeweiligen Laserstrahl 4.1.s bzw. 4.2.s gemessen.

Der erste Analyselaser 4.1 weist eine erste Linse zur Erzeugung des ersten Fokuspunktes 4.1.p und der zweite Laser 4.2 bzw. 4.2' weist eine zweite Linse zur Erzeugung des zweiten Fokuspunktes 4.2.p auf. Die erste Linse und die zweite Linse weisen jeweils eine gleiche Brennweite, insbesondere von 250 mm bis 400 mm, auf. Mittels der Linsen wird die Bündelung der Laserstrahlen 4.1.s bzw. 4.2.s beeinflusst, was sich auf die Ausbildung der Fokuspunkte 4.1.p bzw. 4.2.p mit Bezug zu deren räumlicher Ausdehnung und auch der Höhe der Intensität der Laserstrahlen im Bereich dieser Fokuspunkte 4.1.p bzw. 4.2.p auswirkt.

Alternativ ist auch denkbar, dass die erste Linse und die zweite Linse eine voneinander abweichende Brennweite aufweisen, insbesondere wobei dann ein Wert der Brennweite der zweiten Linse um 5% bis 10% kleiner oder größer ist als ein Wert der Brennweite der ersten Linse.

Der erste Analyselaser 4.1 der zweite Laser 4.2 bzw. 4.2' und das Spektrometer 5 sind gemäß den Fig.2 und Fig.4 bzw. Fig.6 oberhalb der Flugbahn 6 der Objekte 2 angeordnet. Oberhalb steht hier mit Bezug zur Schwerkraft, welche ja auch die Flugbahn 6 der Objekte 2 maßgeblich mit beeinflusst.

In der bevorzugten Ausgestaltung sind der erste Analyselaser 4.1 der zweite Laser 4.2 bzw. 4.2' und das Spektrometer 5 unterhalb der Flugbahn 6 der Objekte 2 angeordnet. Diese Situation ist in den Fig.1 und Fig.3 sowie Fig.5 und Fig.8 dargestellt. Auch der Begriff unterhalb wird hier mit Bezug zur Schwerkraft verwendet.

Der erste Analyselaser 4.1 und / oder der zweite Laser, insbesondere der zweite Analyselaser 4.2 oder der Ablationslaser 4.2' gemäß den Fig. 1 bis 6 bzw. Fig.8 weist vorzugsweise eine Ausrichtungsvorrichtung 7 auf. Mittels einer jeden Ausrichtungsvorrichtung 7 ist die Ausrichtung der zugehörigen Laser 4.1, 4.2 bzw. 4.2' und somit der Ort des zugehörigen Fokuspunktes 4.1.p bzw. 4.2.p änderbar, insbesondere einstellbar. Insbesondere ist die räumliche Anordnung der beiden Fokuspunkte 4.1.p, 4.2.p des ersten Analyselasers 4.1 und des zweiten Analyselasers 4.1 zueinander und im Bezug zum Sichtfeld 5.s des Spektrometers 5 daher änderbar, einstellbar und / oder anpassbar. In der bevorzugten Ausführungsform bzw. Ausgestaltung werden der erste und zweite Analyselaser 4.1 und 4.2 vor Aufnahme des Betriebs des Systems 1, insbesondere manuell ausgerichtet bzw. eingestellt, insbesondere in Abhängigkeit der erwarteten zu analysierenden Objekte 2 bzw. deren erwarteter Größe und / oder voraussichtlicher Flugbahn 6. Die obigen Ausführungen gelten für die Fig. 5 bis 6 im Wesentlichen analog, wobei hier kein Analyselaser, sondern als zweiter Laser 4.2 ein Ablationslaser 4.2' vorgesehen ist und der zweite Fokuspunkt 4.2.s des zweiten Lasers hier nicht im Sichtfeld 5.s des offenen Faserendes 5.ofe liegt. In Fig.7 sind nur erste Analyselaser 4.1 vorgesehen, deren Fokuspunkt 4.1.p aber im Sichtfeld 5.s des offenen Faserendes 5.ofe der Faser 5.of liegt, wie in Fig.7 dargestellt.

Ein Winkel zwischen dem ersten Laserstrahl 4.1.s und dem zweiten Laserstrahl 4.2.s weist einen Wert von kleiner als 30°, insbesondere kleiner als 20°, auf.

Das Zuführmittel 3 ist gemäß der Ausführungsbeispiele aus den Fig.1 bis Fig. 8 insbesondere als ein antreibbares, insbesondere flaches Förderband 3 ausgebildet. Das Förderband 3 ist im Wesentlichen horizontal ausgerichtet, insbesondere um ein Rutschen/Verrutschen der Objekte 2 während des Transportes auf dem Förderband zu vermeiden.

In einer sehr bevorzugten Ausführungsform bzw. Ausgestaltung ist das Zuführmittel 3 als ein Förderband ausgebildet, das im Wesentlichen flach ausgebildet ist, wie bspw. in den Fig.7 und 8 explizit dargestellt. Insbesondere mit einem flach ausgebildeten Förderband können auch mehrere Zuführspuren 10 realisiert werden, was im nachfolgendem auch noch näher erläutert werden darf.

Alternativ könnte das Zuführmittel 3 auch als Rutsche ausgeführt sein. Eine solche Rutsche ist dann geneigt angeordnet, so dass die Objekte 2 sich relativ zur Rutschenoberfläche auf der Rutsche teilweise in Richtung der Schwerkraft bewegen. Es sind auch durchaus Kombinationen von einem Förderband und einer Rutsche zur Ausbildung eines Zuführmittels 3 denkbar.

Es ist nun weiterhin eine Sortiervorrichtung 8 vorgesehen und / oder vorhanden. Die Objekte 2 sind anhand der mittels des Spektrometers 5 generierten Messdaten, insbesondere in Abhängigkeit eines ermittelten bestimmten Materials der Objekte 2, in zumindest zwei unterschiedliche Kategorien, insbesondere mittels eines Luftstrahls, sortierbar. Vorzugsweise weist die Sortiervorrichtung 8 eine Ausblasdüse auf bzw. ist als Ausblasdüse ausgeführt. Die Objekte werden daher analysiert und auf Basis der Ergebnisse und des ermittelten Materials der Objekte 2 oder auf Basis der ermittelten Materialzusammensetzung der Objekte 2 in verschiedene Kategorien eingeteilt und entsprechend der jeweiligen Kategorie sortiert, teils insbesondere dann aussortiert.

Hierzu ist zumindest eine Steuereinheit und / oder ein Computer 9 vorgesehen und / oder vorhanden. Die Steuereinheit 9 und / oder der Computer 9 ist insbesondere mit dem als Förderband ausgebildeten Zuführmittel 3 zu dessen Steuerung und / oder Regelung steuerungstechnisch wirksam verbunden. Die Steuereinheit 9 und / oder der Computer 9 ist mit dem ersten Analyselaser 4.1 zu dessen Steuerung und / oder Regelung steuerungstechnisch wirksam verbunden. Die Steuereinheit 9 und / oder der Computer 9 ist mit dem zweiten Laser 4.2 bzw. 4.2' zu dessen Steuerung und / oder Regelung steuerungstechnisch wirksam verbunden. Die Steuereinheit 9 und / oder der Computer 9 ist mit dem Spektrometer 5 steuerungstechnisch und / oder datentechnisch wirksam verbunden. Mittels der Steuereinheit 9 und / oder des Computers 9 sind die mittels des Spektrometers 5 generierten Messdaten auswertbar, wobei insbesondere das jeweilige Material der jeweiligen Objekte 2 bestimmbar ist. Insbesondere ist die Steuereinheit 9 und / oder der Computer 9 auch mit der Sortiervorrichtung 8 zu deren Steuerung und / oder Regelung steuerungstechnisch wirksam verbunden. Zur Realisierung der jeweiligen steuerungstechnisch und / oder datentechnisch wirksamen Verbindungen sind insbesondere entsprechende Signalleitungen und / oder Datenleitungen vorgesehen. Auch eine Signal- und / oder Datenübertragung über Funk, W-Lan oder Bluetooth ist möglich oder denkbar.

Zur Steuerung des ersten Analyselasers 4.1 und zur Steuerung des zweiten Lasers 4.2 bzw. 4.2' gemäß den Fig.1 bis 8 sind ein erstes und zweites Steuermodul 4.1.LM und 4.2.LM vorgesehen und / oder vorhanden, wobei der erste Analyselaser 4.1 und der zweite Laser 4.2 bzw. 4.2' als ein LIBS-System oder Teil eines LIBS-Systems ausgeführt und / oder ausgebildet ist. Bei der in den Fig.5 und 6 dargestellten Ausführungsform des Systems 1 ist hier kein zweiter Analyselaser vorgesehen, sondern ein zweiter Laser, der als Ablationslaser 4.2' ausgebildet ist, ansonsten gelten die zuvor gemachten Ausführungen analog.

Hierbei ist die optische Faser 5.of und / oder das offene Faserende 5.ofe und /oder das Spektrometer 5 insbesondere auch als Teil des LIBS-Systems ausgebildet und / oder ausgeführt sind. Die Steuermodule 4.1.LM und 4.2.LM sind dabei insbesondere funktionstechnisch und / oder bauteiltechnisch auch Teil der Steuereinheit und / oder des Computers 9 Insbesondere die Steuereinheit und / oder der Computer 9 sind ebenso insbesondere auch als Teil des LIBS-Systems ausgebildet.

Es sind weitere Detektionsmittel 11 vorgesehen und / oder vorhanden, mit deren Hilfe die Geometrie und / oder Größe und / oder die Lage der Objekte 2 auf dem Zuführmittel 3 ermittelbar sind. Insbesondere ist hierzu ein entsprechendes Kamerasystem vorgesehen und / oder steuerungstechnisch mit der Steuereinheit und / oder dem Computer 9 wirksam verbunden ist.

Die zuvor gemachten Ausführungen beziehen sich grundsätzlich auf alle in den Fig.1 bis 8 gezeigten Ausführungsbeispiele. Es darf an dieser nochmal darauf hingewiesen werden, dass die Fig.1 bis 6 im Wesentlichen ein entsprechendes System 1 in der Seitenansicht mit einer auf dem Zuführmittel 3 erkennbar ausgebildeten Zuführspur 10 zeigen. Hingegen zeigen die Fig.7 und 8, insbesondere zumindest teilweise beispielhaft eine sehr bevorzugte Ausführungsform bzw. Ausgestaltung des Systems 1 mit mehreren auf dem Zuführmittel 3 ausgebildeten Zuführspuren 10, die hier zwar bei der sehr bevorzugten Ausführungsform bzw. Ausgestaltung nicht physisch und / oder mechanisch voneinander getrennt sind, aber als "virtuelle" Zuführspuren 10 ausgebildet sind, insbesondere nun auch dadurch realisiert sind, dass dem Zuführmittel 3 entsprechende hier nicht dargestellte Vereinzelungsvorrichtungen, die über die Breite des Zuführmittels 3 angeordnet sind, vorgeschaltet sind. Die zu den Fig.1 bis 6 gemachten Erläuterungen bzw. Ausführungen gelten grundsätzlich daher auch für die Ausführungsbeispiele der Fig.7 und 8 analog. Zu den Fig.7 und 8 explizit aber nun nochmal folgendes: Insbesondere darf nochmals darauf hingewiesen werden, dass bei den Ausführungsbeispielen in Fig. 7 und 8 nicht alle Komponenten, die beispielsweise in den Fig. 1 bis 4 dargestellt sind, auch explizit dargestellt / gezeichnet sind, aber die entsprechenden Komponenten, beispielsweise die Sortiervorrichtung und/oder das Detektionsmittel so wie die Steuereinheit und/oder der Computer etc. auch bei den Ausführungsbeispielen gemäß der Fig. 7 und 8 vorhanden bzw. vorgesehen sind.

Fig.8 zeigt eine sehr bevorzugte Ausführungsform bzw. Ausgestaltung des Systems 1. Das Zuführmittel 3 weist hier für das Zuführen und / oder Fördern der Objekte 2 mehrere Zuführspuren 10 auf. Wie die Fig.8 erkennen lässt, sind die einzelnen Zuführspuren 10 nicht physisch und / oder mechanisch zueinander getrennt, sondern hier bei der in Fig.8 dargestellten Ausführungsform nur dadurch realisiert, dass über die Breite des Zuführmittels 3, das hier insbesondere als Förderband ausgeführt ist, also hier dann über die Breite verteilt mehrere Vereinzelungsvorrichtungen zu Beginn des Zuführmittels 3 angeordnet sind. Diese Vereinzelungsvorrichtungen sind hier in Fig.8 aber nicht explizit dargestellt. Hierdurch werden dann insbesondere die auf dem Zuführmittel 3 durch gestrichelte "Linien 10" dargestellte Zuführspuren 10 realisiert. Insbesondere ist bei der bevorzugten Ausgestaltung das Förderband 3 hier dann auch flach ausgebildet.

Wie die Fig.8 weiter verdeutlicht, ist jeder Zuführspur 10 ein jeweiliger erster und ein jeweiliger zweiter Analyselaser 4.1 und 4.2 zugeordnet. Weiterhin ist jeder Zuführspur 10 ein jeweiliges Sichtfeld 5.s eines Spektrometers 5, insbesondere hier jeder Zuführspur 10 eine jeweilige optische Faser 5.of mit einem offenen Faserende 5.ofe und/oder jeweils ein separates Spektrometer 5 zugeordnet, wobei die Spektrometer 5 in Fig. 8 (und auch in Fig. 7) nicht im Einzelnen dargestellt sind. Insbesondere ist hier dann bei der bevorzugten Ausgestaltung der in den Fig. 7 und 8 gezeigten Ausführungsbeispiele jede optische Faser 5.of mit einem jeweiligen separaten Spektrometer 5 verbunden, wobei die Spektrometer 5 wiederum mit der Steuereinheit und/oder dem Computer 9 steuerungstechnisch und/oder signal- und/oder datentechnisch verbunden sind. Denkbar ist aber auch, dass nur ein Spektrometer vorhanden ist und dann die optischen Fasern der Zuführspuren mit diesem einen Spektrometer verbunden sind.

Die hier in Fig.8 dargestellte, sehr bevorzugte Ausführungsform des Systems 1 korrespondiert im Wesentlichen zu der Fig.1. Die zu Fig.1 gemachten Ausführungen geltend für die Fig.8 in entsprechender analoger Weise. Weiterhin zeigt die Fig.8, dass die hier dargestellten ersten und zweiten Analyselaser 4.1 und 4.2 benachbart zueinander angeordnet sind und hierbei die jeweiligen Analyselaser 4.1 bzw. 4.2 zueinander einen entsprechenden Abstand aufweisen. Gleiches gilt für die benachbart zueinander angeordneten offenen Faserenden 5.ofe. Die jeweiligen Abstände der zueinander benachbarten ersten bzw. zweiten Analyselaser 4.1 bzw. 4.2 bzw. der jeweilige Abstand der zueinander benachbarten offenen Faserenden 5.ofe, liegt im Bereich von 20 bis 200 Millimeter, insbesondere im Bereich von 50 bis 100 Millimeter.

Bei dem in Fig.8 dargestellten sehr bevorzugten Ausführungsbeispiel weist die Sortiervorrichtung, insbesondere mehrere Ausblasdüsen auf, ist insbesondere als Düsenleiste ausgebildet. Jeder Zuführspur 10 ist daher mindestens eine Ausblasdüse zugeordnet.

Hingegen zeigt die Fig.7 zwar korrespondierend zu Fig.8 auch ein Zuführmittel 3, das insbesondere als flaches Förderband ausgebildet ist, jedoch ist hier nur ein Laser, nämlich ein erster Analyselaser 4.1 jeder Zuführspur 10 zugeordnet bzw. für jede Zuführspur 10 angeordnet. Auch für jede Zuführspur 10 ist eine optische Faser 5.of mit einem offenen Faserende 5.ofe, insbesondere für jede Zuführspur 10 auch ein separater, hier nicht dargestellter Spektrometer vorgesehen. Der Fokuspunkt 4.1.p des -ersten- Analyselasers 4.1 liegt im Sichtfeld 5.s der optischen Faser 5.of, wie die Fig.7 gut erkennen lässt. Die zuvor gemachten Ausführungen geltend im Wesentlichen auch für die Fig.7, mit der Ausnahme, dass hier nur ein Laser, nämlich ein Analyselaser 4.1 für jede Zuführspur 10 vorgesehen ist, wobei das Verfahren mit den entsprechenden jeweiligen teils hier nicht dargestellten Komponenten gemäß den zuvor gemachten Ausführungen entsprechend realisierbar ist.

Bei einer weiteren Ausführungsform bzw. Ausgestaltung des Systems 1 kann weiterhin vorgesehen sein bzw. werden, dass die Objekte 2, die nicht oder nur unzureichend identifizierbar sind, mithilfe eines vorhandenen, in den Fig.1 bis 8 nicht dargestellten Rückführungssystems, dann wieder dem Zuführmittel 3 zuführbar sind. Ein derartiges Rückführungssystem weist insbesondere mindestens eine weitere Ausblasdüse und / oder eine weitere zweite Düsenleiste sowie weitere Förderbänder auf, die dann dafür Sorge tragen, dass diese zuvor genannten Objekte 2, insbesondere am Beginn des Zuführmittels 3 dem Zuführmittel 3 wieder mit aufgegeben werden, so dass diese Objekte 2 dann wieder am Ende des Zuführmittels 3 in den entsprechenden Messbereich bzw. in den entsprechenden Messbereichen zur Analyse und / oder Sortierung zugeführt werden können, wie zuvor beschreiben.

### Bezugszeichenliste

- 1: Systems zum Analysieren von Objekten
- 2: Objekte
- 3: Zuführmittel, insbesondere Förderband
- 3.e: Ende des Zuführmittels 3
- 4.1: erster Laser / erster Analyselaser
- 4.1.s: erster Laserstrahl
- 4.1.p: erster Fokuspunkt
- 4.1.LM: Steuermodul
- 4.2: zweiter Laser / zweiter Analyselaser
- 4.2': zweiter Laser / Ablationslaser
- 4.2.s: zweiter Laserstrahl
- 4.2.p: zweiter Fokuspunkt
- 4.2.LM: Steuermodul
- 5: Spektrometer
- 5.s: Sichtfeld des Spektrometers 5
- 5.of: optische Faser
- 5.ofe: offenes Faserende
- 6: Flugbahn
- 7: Ausrichtungsvorrichtung
- 8: Sortiervorrichtung
- 9: Steuereinheit und / oder Computer
- 10: Zuführspur
- 11: Detektionsmittel, insbesondere Kamera

- S: Senkrechte zur Flugbahn 6

## Patentansprüche

1. Ein Verfahren zum Analysieren von Objekten (2), insbesondere von Metallteilen und / oder Aluminiumschrott, wobei zumindest ein Zuführmittel (3), zumindest ein - erster - Analyselaser (4.1) und zumindest ein Spektrometer (5) vorgesehen und / oder vorhanden ist, wobei die Objekte (2) mit Hilfe des Zuführmittels (3) zugeführt, insbesondere gefördert, werden und die Objekte (2) ab einem Ende (3.e) des Zuführmittels (3) zu deren Analyse sich auf einer Flugbahn (6) bewegen, insbesondere von dem Zuführmittel (3) abgeworfen werden, wobei mittels des - ersten - Analyselasers (4.1) ein - erster - Laserstrahl (4.1.s) mit einem - ersten- Fokuspunkt (4.1.p) erzeugt wird, wobei der Analyselaser (4.1) derart zu dem Zuführmittel (3) ausgerichtet ist und / oder ausgerichtet wird, dass die Objekte (2) während ihrer jeweiligen Bewegung auf ihrer jeweiligen Flugbahn (6) den Laserstrahl (4.1.s) im Bereich des Fokuspunktes (4.1.p) durchfliegen, wobei ein Sichtfeld (5.s) des Spektrometers (5) auf einen Bereich der Flugbahn (6) der Objekte (2) ausgerichtet ist und / oder ausgerichtet wird, wobei der Fokuspunkt (4.1.p) des Analyselasers (4.1) im Sichtfeld (5.s) des Spektrometers (5) liegt, wobei mittels des Fokuspunktes (4.1.p) des Analyselasers (4.1) Plasmen der Objekte (2) erzeugt werden, und wobei mittels des Spektrometers (5) Emissionen dieser Plasmen spektroskopisch analysiert werden, **dadurch gekennzeichnet, dass** das Sichtfeld (5.s) des Spektrometers (5) durch ein offenes Faserende (5.ofe) einer optischen Faser (5.of) realisiert ist.

2. Verfahren nach Anspruch 1, **dadurch gekennzeichnet, dass** mittels des offenen Faserendes (5.ofe) Emissionen der von dem ersten Analyselaser (4.1) an den Objekten (2) erzeugten Plasmen aufgenommen werden.

3. Verfahren nach Anspruch 1 oder 2, **dadurch gekennzeichnet, dass** ein zweiter Laser vorgesehen und / oder vorhanden ist, wobei der zweite Laser als ein zweiter Analyselaser (4.2) oder als Ablationslaser (4.2') ausgebildet und / oder ausgeführt ist bzw. entsprechend eingesetzt wird, wobei mit Hilfe des zweiten Lasers (4.2, 4.2') ein zweiter Laserstrahl (4.2.s) mit einem zweiten Fokuspunkt (4.2.p) erzeugt wird, wobei der zweite Laser (4.2, 4.2') derart zu dem Zuführmittel (3) ausgerichtet ist und / oder ausgerichtet wird, dass die Objekte (2) während ihrer jeweiligen Bewegung auf ihrer jeweiligen Flugbahn (6) den zweiten Laserstrahl (4.2.s) im Bereich des zweiten Fokuspunktes (4.2.p) durchfliegen.

4. Verfahren nach Anspruch 3, **dadurch gekennzeichnet, dass** der zweite Fokuspunkt (4.2.p) des zweiten Analyselasers (4.2.s) im Sichtfeld (5.s) des Spektrometers (5) liegt, wobei der erste Analyselaser (4.1) und der zweite Analyselaser (4.2) derart zueinander ausgerichtet sind und / oder ausgerichtet werden, so dass der erste Fokuspunkt (4.1.p) des ersten Analyselasers (4.1) zum zweiten Fokuspunkt (4.2.p) des zweiten Analyselasers (4.2) beabstandet ist, wobei mittels des Fokuspunktes (4.1.p) des ersten Analyselasers (4.1) und / oder mittels des Fokuspunktes (4.2.p) des zweiten Analyselasers (4.2) Plasmen der Objekte (2) erzeugt werden, und wobei mittels des Spektrometers (5) Emissionen dieser Plasmen spektroskopisch analysiert werden, insbesondere also auch die durch den zweiten Fokuspunkt (4.2.p) erzeugten Emissionen der Objekte (2) mittels des offenen Faserendes (5.ofe) aufgenommen werden.

5. Verfahren nach Anspruch 4, **dadurch gekennzeichnet, dass** der erste Analyselaser (4.1) und der zweite Analyselaser (4.2) derart zueinander ausgerichtet werden, dass der erste Fokuspunkt (4.1.p) des ersten Analyselasers (4.1) und der zweite Fokuspunkt (4.2.p) des zweiten Analyselasers (4.2) auf einer im Wesentlichen Senkrechten (S) zu der Flugbahn (6) der Objekte (2) übereinander liegen.

6. Verfahren nach einem der vorstehenden Ansprüche, **dadurch gekennzeichnet, dass** der erste Analyselaser (4.1) und der zweite Laser (4.2, 4.2') derart zueinander ausgerichtet werden, dass der erste Fokuspunkt (4.1.p) des ersten Analyselasers (4.1) und der zweite Fokuspunkt (4.2.p) des zweiten Lasers (4.2, 4.2') im Wesentlichen horizontal nebeneinander liegen bzw. horizontal zueinander beabstandet sind.

7. Verfahren nach einem der vorangehenden Ansprüche, **dadurch gekennzeichnet, dass** mittels des ersten Analyselasers (4.1) und / oder mittels der zweiten Lasers (4.2, 4.2') Pulse mit einer bestimmten Pulswiederholrate emittiert werden, wobei der Wert dieser Pulswiederholrate in kHz einem bestimmten Wert der Geschwindigkeit der Objekte (2) beim Verlassen des Zuführmittels (3) in m/s multipliziert mit einem bestimmten Faktor, insbesondere einem Faktor von zumindest 15, entspricht, insbesondere ein Ablationslaser (4.2') eine Pulswiederholrate von insbesondere zumindest 45 kHz und der -erste- Analyselaser (4.1) eine Pulswiederholrate von zumindest 5 kHz aufweist und / oder für den Fall, dass ein erster und ein zweiter Analyselaser (4.1 bzw. 4.2) verwendet wird, dann für diese Analyselaser eine Pulswiederholrate von insbesondere zumindest 20 kHz, insbesondere von zumindest 45 kHz aufweisen.

8. Verfahren nach einem der vorangehenden Ansprüche, **dadurch gekennzeichnet, dass** der erste Analyselaser (4.1) und / oder der zweite Laser (4.2, 4.2') eine Ausrichtungsvorrichtung (7) aufweist, wobei bei Bedarf mittels einer jeden Ausrichtungsvorrichtung (7) die Ausrichtung des zugehörigen Lasers (4.1, 4.2, 4.2') und somit der Ort des zugehörigen Fokuspunktes (4.1.p, 4.2.p) geändert wird, insbesondere wobei die räumliche Anordnung der Fokuspunkte (4.1.p, 4.2.p) des ersten Analyselasers (4.1) und des zweiten Lasers (4.2, 4.2') zueinander und im Bezug zum Sichtfeld (5.s) des Spektrometers (5) geändert wird.

9. Verfahren nach einem der vorangehenden Ansprüche, **dadurch gekennzeichnet, dass** eine Sortiervorrichtung (8) vorgesehen und / oder vorhanden ist, wobei die Objekte (2) anhand der mittels des Spektrometers (5) generierten Messdaten, insbesondere in Abhängigkeit eines bestimmten Materials der Objekte (2), in zumindest zwei unterschiedliche Kategorien, insbesondere mittels eines Luftstrahls, sortiert werden.

10. Verfahren nach einem der vorangehenden Ansprüche, **dadurch gekennzeichnet, dass** zumindest eine Steuereinheit (9) und / oder ein Computer (9) vorgesehen und / oder vorhanden ist, insbesondere wobei ein als Förderband ausgebildetes Zuführmittel (3) mittels der Steuereinheit (9) und / oder dem Computer (9) gesteuert und / oder geregelt wird, wobei der erste Analyselaser (4.1) mittels der Steuereinheit (9) und / oder dem Computer (9) gesteuert und / oder geregelt wird, wobei der zweite Lasers (4.2, 4.2') mittels der Steuereinheit (9) und / oder dem Computer (9) gesteuert und / oder geregelt wird, wobei das Spektrometer (5) mittels der Steuereinheit (9) und / oder dem Computer (9) gesteuert und / oder geregelt wird, wobei mittels der Steuereinheit (9) und / oder des Computers (9) die mittels des Spektrometers (5) generierten Messdaten ausgewertet werden, insbesondere wobei das Material der jeweiligen Objekte (2) bestimmt wird, und wobei die Sortiervorrichtung (8) mittels der Steuereinheit (9) und / oder dem Computer (9) gesteuert und / oder geregelt wird, insbesondere jeweilige bestimmte Objekte (2) ausgeblasen und / oder aussortiert werden.

11. Verfahren nach einem der vorangehenden Ansprüche, **dadurch gekennzeichnet, dass** über das Zuführmittel (3) die jeweiligen Objekte (2) vereinzelt zugeführt werden, insbesondere von dem Ende (3e) des Zuführmittels (3) vereinzelt sequentiell nacheinander abgeworfen werden.

12. Verfahren nach einem oder mehreren der vorhergehenden Ansprüche, **dadurch gekennzeichnet, dass** zur Steuerung des ersten Analyselasers (4.1) und zur Steuerung des zweiten Lasers (4.2, 4.2') ein erstes und ein zweites Steuermodul (4.1.LM und 4.2.LM) vorgesehen und / oder vorhanden ist, wobei der erste Analyselaser (4.1) und / oder der zweite Lasers (4.2, 4.2') und / oder das erste und / oder zweite Steuermodul (4.1.LM, 4.2.LM) als ein LIBS-System oder zumindest als Teil eines LIBS-Systems ausgeführt und / oder ausgebildet ist.

13. Verfahren nach Anspruch 12, **dadurch gekennzeichnet, dass** die optische Faser (5.of) und / oder das offene Faserende (5.ofe) und / oder das Spektrometer (5) als Teil des LIBS-Systems ausgebildet und / oder ausgeführt sind.

14. Verfahren nach Anspruch 12 oder 13, dass die Steuermodule (4.1.LM und 4.2.LM) funktionstechnisch und / oder bauteiltechnisch als Bestandteile der Steuereinheit und / oder des Computers (9) ausgeführt sind, insbesondere auch die Steuereinheit und / oder der Computer (9) als Teil des LIBS-Systems ausgebildet ist.

15. Verfahren nach einem oder mehreren der vorhergehenden Ansprüche, **dadurch gekennzeichnet, dass** mindestens ein weiteres Detektionsmittel vorgesehen und / oder vorhanden ist, insbesondere ein Kamerasystem vorgesehen und / oder vorhanden ist, mit dessen Hilfe die Geometrie und / oder die Größe und / oder Position der Objekte (2) auf dem Zuführmittel (3) ermittelbar ist, insbesondere das Kamerasystem steuerungstechnisch mit der Steuereinheit und / oder dem Computer (9) wirksam verbunden ist.

16. Ein System (1) zum Analysieren von Objekten (2), insbesondere von Metallteilen und / oder Aluminiumschrott, insbesondere zur Durchführung eines Verfahrens nach einem der Ansprüche 1 bis 15, mit zumindest einem Zuführmittel (3), mit zumindest einem - ersten - Analyselaser (4.1) und mit zumindest einem Spektrometer (5), wobei die Objekte (2) mit Hilfe des Zuführmittels (3) zuführbar sind und die Objekte (2) ab einem Ende (3e) des Zuführmittels (3) zu deren Analyse auf einer Flugbahn (6) bewegbar, insbesondere von dem Zuführmittel (3) abwerfbar, sind, wobei mittels des - ersten - Analyselasers (4.1) ein - erster - Laserstrahl (4.1.s) mit einem - ersten- Fokuspunkt (4.1.p) erzeugbar ist, wobei der Analyselaser (4.1) derart zu dem Zuführmittel (3) ausgerichtet ist, dass die Objekte (2) während ihrer jeweiligen Bewegung auf ihrer jeweiligen Flugbahn (6) den Laserstrahl (4.1.s) im Bereich des Fokuspunktes (4.1.p) durchfliegen, wobei das Spektrometer (5) ein Sichtfeld (5.s) aufweist, wobei das Sichtfeld (5.s) des Spektrometers (5) auf einen Bereich der Flugbahn (6) der Objekte (2) ausgerichtet ist, wobei der Fokuspunkt (4.1.p) des Analyselasers (4.1) im Sichtfeld (5.s) des Spektrometers (5) angeordnet ist, wobei mittels des Fokuspunktes (4.1.p) des Analyselasers (4.1) Plasmen der Objekte (2) erzeugbar sind, und wobei mittels des Spektrometers (5) Emissionen dieser Plasmen spektroskopisch analysierbar sind, **dadurch gekennzeichnet, dass** das Sichtfeld (5.s) des Spektrometers (5) durch ein offenes Faserende (5.ofe) einer optischen Faser (5.of) realisiert ist.

17. System (1) nach Anspruch 16, **dadurch gekennzeichnet, dass** mittels des offenen Faserendes (5.ofe) Emissionen der von dem Analyselaser (4.1) an den Objekten (2) erzeugten Plasmen aufnehmbar sind.

18. System (1) nach Anspruch 16 oder 17, **dadurch gekennzeichnet, dass** ein Abstand zwischen dem offenen Faserende (5.ofe) und einem Ende (3.e), insbesondere einer Abwurfkante, des Zuführmittels (3) einen bestimmten Wert, insbesondere von weniger als 350 mm, insbesondere zwischen 50mm und 200 mm, aufweist, und/oder dass das offene Faserende (5.ofe) eine numerische Apertur mit einem Wert von 0,14 bis 0,28, insbesondere von 0,18 bis 0,24, aufweist, und/oder dass die optische Faser (5.of) als Stufenindex-Faser, insbesondere als Multimode-Faser, ausgeführt ist, und/oder dass die optische Faser (5.of) einen Quarzglaskern und eine Ummantelung aufweist, insbesondere wobei die Ummantelung eine äußere Acrylat-Ummantelung und eine Fluor-dotierte Zwischenschicht aufweist, und/oder dass die optische Faser (5.of) einen Kerndurchmesser mit einem Wert von 50 µm bis 700 µm, insbesondere von 400 µm bis 600 µm, aufweist.

19. System (1) nach einem der Ansprüche 16 bis 18, **dadurch gekennzeichnet, dass** ein zweiter Laser vorgesehen und / oder vorhanden ist, wobei der zweite Laser als zweiter Analyselaser (4.2) oder als Ablationslaser (4.2') ausgebildet und / oder ausgeführt ist bzw. entsprechend einsetzbar ist, wobei mittels des zweiten Lasers (4.2, 4.2') ein zweiter Laserstrahl (4.2.s) mit einem zweiten Fokuspunkt (4.2.p) erzeugbar ist, wobei der zweite Laser (4.2, 4.2') derart zu dem Zuführmittel (3) ausgerichtet ist, dass die Objekte (2) während ihrer jeweiligen Bewegung auf ihrer jeweiligen Flugbahn (6) den zweiten Laserstrahl (4.2.s) im Bereich des zweiten Fokuspunktes (4.2.p) durchfliegen.

20. System (1) nach Anspruch 19, **dadurch gekennzeichnet, dass**, der zweite Fokuspunkt (4.2.p) des zweiten Analyselasers (4.2) im Sichtfeld (5.s) des Spektrometers (5) angeordnet ist, wobei der erste Analyselaser (4.1) und der zweite Analyselaser (4.2) derart zueinander ausgerichtet sind, dass der erste Fokuspunkt (4.1.p) des ersten Analyselasers (4.1) zum zweiten Fokuspunkt (4.2.p) des zweiten Analyselasers (4.2) beabstandet angeordnet ist, wobei mittels des Fokuspunktes (4.1.p) des ersten Analyselasers (4.1) und / oder mittels des Fokuspunktes (4.2.p) des zweiten Analyselasers (4.2) Plasmen der Objekte (2) erzeugbar sind, und wobei mittels des Spektrometers (5) Emissionen dieser Plasmen spektroskopisch analysierbar sind, insbesondere also auch die durch den zweiten Fokuspunkt (4.2.p) erzeugten Emissionen der Objekte (2) mittels des offenen Faserendes (5.ofe) aufnehmbar sind.

21. System (1) nach Anspruch 20, **dadurch gekennzeichnet, dass** der erste Analyselaser (4.1) und der zweite Analyselaser (4.2) derart zueinander ausgerichtet sind, dass der Fokuspunkt (4.1.p) des ersten Analyselasers (4.1) und der Fokuspunkt (4.2.p) des zweiten Analyselasers (4.2) auf einer im Wesentlichen Senkrechten (S) zu der Flugbahn (6) der Objekte (2) übereinander angeordnet sind.

22. System (1) nach einem der Ansprüche 19 bis 21, **dadurch gekennzeichnet, dass** der erste Analyselaser (4.1) und der zweite Laser (4.2, 4.2') derart zueinander ausgerichtet sind, dass der Fokuspunkt (4.1.p) des ersten Analyselasers (4.1) und der Fokuspunkt (4.2.p) des zweiten Lasers (4.2, 4.2') im Wesentlichen horizontal nebeneinander angeordnet bzw. horizontal zueinander beabstandet sind.

23. System (1) nach einem der Ansprüche 16 bis 22, **dadurch gekennzeichnet, dass** der erste Analyselaser (4.1) und / oder der zweite Laser (4.2, 4.2') eine Pulswiederholrate aufweisen, wobei der Wert dieser Pulswiederholrate in kHz einem bestimmten Wert der Geschwindigkeit der Objekte (2) beim Verlassen des Zuführmittels (3) in m/s multipliziert mit einem bestimmten Faktor, insbesondere einem Faktor von zumindest 15, entspricht, und/oder dass der erste Fokuspunkt (4.1.p) des ersten Analyselasers (4.1) und / oder der zweite Fokuspunkt (4.2.p) des zweiten Lasers (4.2, 4.2') einen Fokuspunktdurchmesser von 0,1 mm bis 0,2 mm, insbesondere von 0,15 mm, aufweist.

24. System (1) nach einem der Ansprüche 19 bis 23, **dadurch gekennzeichnet, dass** der erste Analyselaser (4.1) eine erste Linse zur Erzeugung des ersten Fokuspunktes (4.1.p) und der zweite Laser (4.2, 4.2') eine zweite Linse zur Erzeugung des zweiten Fokuspunktes (4.2.p) aufweist, wobei die erste Linse und die zweite Linse jeweils eine gleiche Brennweite, insbesondere von 250 mm bis 400 mm, aufweisen, oder dass der erste Analyselaser (4.1) eine erste Linse zur Erzeugung des ersten Fokuspunktes (4.1.p) und der zweite Laser (4.2, 4.2') eine zweite Linse zur Erzeugung des zweiten Fokuspunktes (4.2.p) aufweisen, wobei die erste Linse und die zweite Linse eine voneinander abweichende Brennweite aufweisen, insbesondere wobei ein Wert der Brennweite der zweiten Linse um 5% bis 10% kleiner oder größer ist als ein Wert der Brennweite der ersten Linse.

25. System (1) nach einem der Ansprüche 16 bis 24, **dadurch gekennzeichnet, dass** der erste Analyselaser (4.1), das Spektrometer (5) und insbesondere der zweite Laser (4.2, 4.2') oberhalb der Flugbahn (6) der Objekte (2) angeordnet sind oder dass der erste Analyselaser (4.1), das Spektrometer (5) und insbesondere der zweite Laser (4.2, 4.2') unterhalb der Flugbahn (6) der Objekte (2) angeordnet sind.

26. System (1) nach einem der Ansprüche 16 bis 25, **dadurch gekennzeichnet, dass** der erste Analyselaser (4.1) und / oder der zweite Laser (4.2, 4.2') eine Ausrichtungsvorrichtung (7) aufweist, wobei mittels einer jeden Ausrichtungsvorrichtung (7) die Ausrichtung des zugehörigen Lasers (4.1, 4.2, 4.2') und somit der Ort des zugehörigen Fokuspunktes (4.1.p, 4.2.p) änderbar ist, insbesondere wobei die räumliche Anordnung der Fokuspunkte (4.1.p, 4.2.p) des ersten Analyselasers (4.1) und des zweiten Lasers (4.2, 4.2') zueinander und im Bezug zum Sichtfeld (5.s) des Spektrometers (5) änderbar ist, und/oder dass ein Winkel zwischen dem ersten Laserstrahl (4.1.s) und dem zweiten Laserstrahl (4.2.s) einen Wert von kleiner als 30°, insbesondere kleiner als 20°, aufweist.

27. System nach einem oder mehreren der vorangehenden Ansprüche 16 bis 26, **dadurch gekennzeichnet, dass** das Zuführmittel (3) derart ausgebildet und / oder ausgeführt ist, dass eine Vereinzelung der Objekte (2) und / oder ein vereinzelter Transport der Objekte (2) auf dem Zuführmittel (3), insbesondere in einer sequentiellen Reihenfolge aneinander gereiht in einer Linie, ermöglicht und realisiert ist und/oder dass das Zuführmittel (3) als ein Förderband (3) oder als eine Rutsche ausgeführt ist, und/oder dass das Förderband (3) im Wesentlichen horizontal ausgerichtet ist, und/oder dass das Förderband (3) oder die Rutsche im Querschnitt V-förmig oder gewölbt ausgebildet ist.

28. System (1) nach einem der Ansprüche 16 bis 27, **dadurch gekennzeichnet, dass** eine Sortiervorrichtung (8) vorgesehen und / oder vorhanden ist, wobei die Objekte (2) anhand der mittels des Spektrometers (5) generierten Messdaten, insbesondere in Abhängigkeit eines bestimmten Materials der Objekte (2), in zumindest zwei unterschiedliche Kategorien, insbesondere mittels eines Luftstrahls, sortierbar sind, insbesondere die Sortiervorrichtung (8) eine Ausblasdüse aufweist.

29. System (1) nach einem der Ansprüche 16 bis 28, **dadurch gekennzeichnet, dass** zumindest eine Steuereinheit (9) und / oder ein Computer (9) vorgesehen und / oder vorhanden ist, insbesondere wobei die Steuereinheit (9) und / oder der Computer (9) mit dem als Förderband ausgebildeten Zuführmittel (3) zu dessen Steuerung und / oder Regelung steuerungstechnisch wirksam verbunden ist, wobei die Steuereinheit (9) und / oder der Computer (9) mit dem ersten Analyselaser (4.1) zu dessen Steuerung und / oder Regelung steuerungstechnisch wirksam verbunden ist, wobei die Steuereinheit (9) und / oder der Computer (9) mit dem zweiten Laser (4.2, 4.2') zu dessen Steuerung und / oder Regelung steuerungstechnisch wirksam verbunden ist, wobei die Steuereinheit (9) und / oder der Computer (9) mit dem Spektrometer (5) steuerungstechnisch und / oder datentechnisch wirksam verbunden ist, wobei mittels der Steuereinheit (9) und / oder des Computers (9) die mittels des Spektrometers (5) generierten Messdaten auswertbar sind, insbesondere wobei das jeweilige Material der jeweiligen Objekte (2) bestimmbar ist, und wobei die Steuereinheit (9) und / oder der Computer (9) mit der Sortiervorrichtung (8) zu deren Steuerung und / oder Regelung steuerungstechnisch wirksam verbunden ist.

30. System nach einem oder mehreren der vorhergehenden Ansprüche 16 bis 29, **dadurch gekennzeichnet, dass** zur Steuerung des ersten Analyselasers (4.1) und zur Steuerung des zweiten Lasers (4.2, 4.2') ein erstes und zweites Steuermodul (4.1.LM und 4.2.LM) vorgesehen und / oder vorhanden ist, wobei der erste Analyselaser (4.1) und / oder der zweite Lasers (4.2, 4.2') und / oder das erste und / oder zweite Steuermodul (4.1.LM, 4.2.LM) als ein LIBS-System oder als Teil eines LIBS-Systems ausgeführt und / oder ausgebildet ist bzw. sind.

31. System nach einem der Ansprüche 16 bis 30, **dadurch gekennzeichnet, dass** die optische Faser (5.of) und / oder das Spektrometer (5) als Teil des LIBS-Systems ausgebildet und / oder ausgeführt sind.

32. System nach Anspruch 30 oder 31, dass das erste und / oder zweite Steuermodule (4.1.LM und 4.2.LM) funktionstechnisch und / oder bauteiltechnisch als Teil der Steuereinheit und / oder des Computers (9) ausgebildet sind, insbesondere auch die Steuereinheit und / oder der Computer (9) als Teil des LIBS-Systems ausgebildet ist.

33. System nach einem oder mehreren der vorhergehenden Ansprüche 16 bis 32, **dadurch gekennzeichnet, dass** mindestens ein weiteres Detektionsmittel vorgesehen und / oder vorhanden sind, insbesondere ein Kamerasystem vorhanden ist, mit dessen Hilfe die Geometrie und / oder Größe und / oder die Lage der zugeführten Objekte (2) auf dem Zuführmittel (3) ermittelbar sind, insbesondere das Kamerasystem steuerungstechnisch mit der Steuereinheit und / oder dem Computer (9) wirksam verbunden ist und/oder dass das Zuführmittel (3) für das Zuführen und/oder Fördern der Objekte (2) mindestens eine Zuführspur (10) aufweist.

34. System nach einem oder mehreren der vorhergehenden Ansprüche 16 bis 33, **dadurch gekennzeichnet, dass** das Zuführmittel (3) für das Zuführen und/oder Fördern der Objekte (2) mehrere Zuführspuren (10), insbesondere mehrere virtuell getrennte oder mehrere physisch getrennte Zuführspuren (10), aufweist und jeder Zuführspur (10) ein jeweiliger erster und / oder ein jeweiliger zweiter Analyselaser (4.1 und 4.2) und / oder ein Ablationslaser (4.2') und ein jeweiliges Sichtfeld (5.s) eines Spektrometers (5), insbesondere jeder Zuführspur (10) eine jeweilige optische Faser (5.of) mit einem offenen Faserende (5.ofe) und/oder ein jeweiliges separates Spektrometer (5), zugeordnet sind.

35. System nach Anspruch 34, **dadurch gekennzeichnet, dass** der Abstand zueinander benachbarter erster bzw. zweiter Analyselaser (4.1 bzw. 4.2) bzw. benachbarter Ablationslaser (4.2') und/oder der Abstand zueinander benachbarter offener Faserenden (5.ofe) im Bereich von 20 bis 200 mm, insbesondere im Bereich von 50 bis 100 mm liegt.

36. System nach einem der Ansprüche 34 oder 35, **dadurch gekennzeichnet, dass** die Sortiervorrichtung (8) eine mehrere Ausblasdüsen aufweisende - erste - Düsenleiste umfasst, wobei jeder Zuführspur (10) mindestens eine Ausblasdüse zugeordnet ist, und/oder dass Objekte (2), die nicht oder nur unzureichend identifizierbar sind, mit Hilfe eines vorhandenen Rückführungssystems dann wieder dem Zuführmittel (3) zuführbar sind.

## Claims

1. Method for analysing objects (2), in particular metal parts and/or aluminium scrap, wherein at least one feeding means (3), at least one - first - analysis laser (4.1) and at least one spectrometer (5) are provided and/or present, wherein the objects (2) are fed, in particular conveyed, with the aid of the feeding means (3) and, starting from an end (3.e) of the feeding means (3), the objects (2), for the analysis thereof, move on a trajectory (6), in particular are cast off from the feeding means (3), wherein a - first - laser beam (4.1.s) with a - first - focal point (4.1.p) is generated by means of the - first - analysis laser (4.1), wherein the analysis laser (4.1) has been aligned and/or is aligned with the feeding means (3) in such a way that the objects (2) fly through the laser beam (4.1.s) in the region of the focal point (4.1.p) during their respective movement on their respective trajectory (6), wherein a field of view (5.s) of the spectrometer (5) has been aligned and/or is aligned with a region of the trajectory (6) of the objects (2), wherein the focal point (4.1.p) of the analysis laser (4.1) lies in the field of view (5.s) of the spectrometer (5), wherein plasmas of the objects (2) are generated by means of the focal point (4.1.p) of the analysis laser (4.1), and wherein emissions of said plasmas are analysed spectroscopically by means of the spectrometer (5), **characterized in that** the field of view (5.s) of the spectrometer (5) is realized by an open fibre end (5.ofe) of an optical fibre (5.of).

2. Method according to Claim 1, **characterized in that** emissions of the plasmas generated at the objects (2) by the first analysis laser (4.1) are captured by means of the open fibre end (5.ofe).

3. Method according to Claim 1 or 2, **characterized in that** a second laser is provided and/or present, wherein the second laser is configured and/or embodied as a second analysis laser (4.2) or as an ablation laser (4.2') or is used accordingly, wherein a second laser beam (4.2.s) with a second focal point (4.2.p) is generated with the aid of the second laser (4.2, 4.2'), wherein the second laser (4.2, 4.2') has been aligned and/or is aligned with the feeding means (3) in such a way that the objects (2) fly through the second laser beam (4.2.s) in the region of the second focal point (4.2.p) during their respective movement on their respective trajectory (6).

4. Method according to Claim 3, **characterized in that** the second focal point (4.2.p) of the second analysis laser (4.2.s) lies in the field of view (5.s) of the spectrometer (5), wherein the first analysis laser (4.1) and the second analysis laser (4.2) have been aligned and/or are aligned with one another in such a way that the first focal point (4.1.p) of the first analysis laser (4.1) is spaced apart from the second focal point (4.2.p) of the second analysis laser (4.2), wherein plasmas of the objects (2) are generated by means of the focal point (4.1.p) of the first analysis laser (4.1) and/or by means of the focal point (4.2.p) of the second analysis laser (4.2), and wherein emissions of said plasmas are analysed spectroscopically by means of the spectrometer (5), i.e. in particular the emissions of the objects (2) generated by the second focal point (4.2.p) are also captured by means of the open fibre end (5.ofe).

5. Method according to Claim 4, **characterized in that** the first analysis laser (4.1) and the second analysis laser (4.2) are aligned with one another in such a way that the first focal point (4.1.p) of the first analysis laser (4.1) and the second focal point (4.2.p) of the second analysis laser (4.2) lie one above another on substantially a perpendicular (S) to the trajectory (6) of the objects (2).

6. Method according to any of the preceding claims, **characterized in that** the first analysis laser (4.1) and the second laser (4.2, 4.2') are aligned with one another in such a way that the first focal point (4.1.p) of the first analysis laser (4.1) and the second focal point (4.2.p) of the second laser (4.2, 4.2') are substantially horizontally adjacent to one another or horizontally spaced apart from one another.

7. Method according to any of the preceding claims, **characterized in that** pulses with a specific pulse repetition rate are emitted by means of the first analysis laser (4.1) and/or by means of the second laser (4.2, 4.2'), wherein the value of said pulse repetition rate in kHz corresponds to a specific value of the speed of the objects (2) upon leaving the feeding means (3) in m/s multiplied by a specific factor, in particular a factor of at least 15, in particular an ablation laser (4.2') has a pulse repetition rate of in particular at least 45 kHz and the - first - analysis laser (4.1) has a pulse repetition rate of at least 5 kHz and/or for the case where a first and a second analysis laser (4.1 and respectively 4.2) are used, then these analysis lasers have a pulse repetition rate of in particular at least 20 kHz, in particular of at least 45 kHz.

8. Method according to any of the preceding claims, **characterized in that** the first analysis laser (4.1) and/or the second laser (4.2, 4.2') have/has an alignment device (7), wherein the alignment of the associated laser (4.1, 4.2, 4.2') and thus the location of the associated focal point (4.1.p, 4.2.p) are changed as necessary by means of each alignment device (7), in particular wherein the spatial arrangement of the focal points (4.1.p, 4.2.p) of the first analysis laser (4.1) and the second laser (4.2, 4.2') with respect to one another and in relation to the field of view (5.s) of the spectrometer (5) is changed.

9. Method according to any of the preceding claims, **characterized in that** a sorting device (8) is provided and/or present, wherein on the basis of the measurement data generated by means of the spectrometer (5), in particular depending on a determined material of the objects (2), the objects (2) are sorted into at least two different categories, in particular by means of an air jet.

10. Method according to any of the preceding claims, **characterized in that** at least one control unit (9) and/or one computer (9) are/is provided and/or present, in particular wherein a feeding means (3) configured as a conveyor belt is controlled and/or regulated by means of the control unit (9) and/or the computer (9), wherein the first analysis laser (4.1) is controlled and/or regulated by means of the control unit (9) and/or the computer (9), wherein the second laser (4.2, 4.2') is controlled and/or regulated by means of the control unit (9) and/or the computer (9), wherein the spectrometer (5) is controlled and/or regulated by means of the control unit (9) and/or the computer (9), wherein the measurement data generated by means of the spectrometer (5) are evaluated by means of the control unit (9) and/or the computer (9), in particular wherein the material of the respective objects (2) is determined, and wherein the sorting device (8) is controlled and/or regulated by means of the control unit (9) and/or the computer (9), in particular respective determined objects (2) are blown out and/or sorted out.

11. Method according to any of the preceding claims, **characterized in that** the respective objects (2) are fed in separated fashion by way of the feeding means (3), in particular are cast off from the end (3e) of the feeding means (3) in separated fashion sequentially one after another.

12. Method according to one or more of the preceding claims, **characterized in that** a first and a second control module (4.1.LM and 4.2.LM) are provided and/or present for controlling the first analysis laser (4.1) and for controlling the second laser (4.2, 4.2'), wherein the first analysis laser (4.1) and/or the second laser (4.2, 4.2') and/or the first and/or second control module (4.1.LM, 4.2.LM) are/is embodied and/or configured as an LIBS system or at least as part of an LIBS system.

13. Method according to Claim 12, **characterized in that** the optical fibre (5.of) and/or the open fibre end (5.ofe) and/or the spectrometer (5) are/is configured and/or embodied as part of the LIBS system.

14. Method according to Claim 12 or 13, in that the control modules (4.1.LM and 4.2.LM) are embodied functionally and/or in terms of component engineering as constituent parts of the control unit and/or of the computer (9), in particular the control unit and/or the computer (9) are/is also configured as part of the LIBS system.

15. Method according to one or more of the preceding claims, **characterized in that** at least one further detection means is provided and/or present, in particular a camera system is provided and/or present, with the aid of which the geometry and/or the size and/or position of the objects (2) on the feeding means (3) are/is ascertainable, in particular the camera system is effectively connected to the control unit and/or the computer (9) in terms of control engineering.

16. System (1) for analysing objects (2), in particular metal parts and/or aluminium scrap, in particular for carrying out a method according to any of Claims 1 to 15, comprising at least one feeding means (3), comprising at least one - first - analysis laser (4.1) and comprising at least one spectrometer (5), wherein the objects (2) are feedable with the aid of the feeding means (3) and, starting from an end (3e) of the feeding means (3), the objects (2), for the analysis thereof, are movable on a trajectory (6), in particular are able to be cast off from the feeding means (3), wherein a - first - laser beam (4.1.s) with a - first - focal point (4.1.p) is generable by means of the - first - analysis laser (4.1), wherein the analysis laser (4.1) is aligned with the feeding means (3) in such a way that the objects (2) fly through the laser beam (4.1.s) in the region of the focal point (4.1.p) during their respective movement on their respective trajectory (6), wherein the spectrometer (5) has a field of view (5.s), wherein the field of view (5.s) of the spectrometer (5) is aligned with a region of the trajectory (6) of the objects (2), wherein the focal point (4.1.p) of the analysis laser (4.1) is arranged in the field of view (5.s) of the spectrometer (5), wherein plasmas of the objects (2) are generable by means of the focal point (4.1.p) of the analysis laser (4.1), and wherein emissions of said plasmas are analysable spectroscopically by means of the spectrometer (5), **characterized in that** the field of view (5.s) of the spectrometer (5) is realized by an open fibre end (5.ofe) of an optical fibre (5.of).

17. System (1) according to Claim 16, **characterized in that** emissions of the plasmas generated at the objects (2) by the analysis laser (4.1) are capturable by means of the open fibre end (5.ofe).

18. System (1) according to Claim 16 or 17, **characterized in that** a distance between the open fibre end (5.ofe) and an end (3.e), in particular a casting-off edge, of the feeding means (3) has a specific value, in particular of less than 350 mm, in particular between 50 mm and 200 mm, and/or **in that** the open fibre end (5.ofe) has a numerical aperture with a value of 0.14 to 0.28, in particular of 0.18 to 0.24, and/or **in that** the optical fibre (5.of) is embodied as a step-index fibre, in particular as a multimode fibre, and/or **in that** the optical fibre (5.of) has a quartz glass core and a cladding, in particular wherein the cladding comprises an outer acrylate cladding and a fluorine-doped intermediate layer, and/or **in that** the optical fibre (5.of) has a core diameter with a value of 50 µm to 700 µm, in particular of 400 µm to 600 µm.

19. System (1) according to any of Claims 16 to 18, **characterized in that** a second laser is provided and/or present, wherein the second laser is configured and/or embodied as a second analysis laser (4.2) or as an ablation laser (4.2') or is usable accordingly, wherein a second laser beam (4.2.s) with a second focal point (4.2.p) is generable by means of the second laser (4.2, 4.2'), wherein the second laser (4.2, 4.2') is aligned with the feeding means (3) in such a way that the objects (2) fly through the second laser beam (4.2.s) in the region of the second focal point (4.2.p) during their respective movement on their respective trajectory (6).

20. System (1) according to Claim 19, **characterized in that** the second focal point (4.2.p) of the second analysis laser (4.2) is arranged in the field of view (5.s) of the spectrometer (5), wherein the first analysis laser (4.1) and the second analysis laser (4.2) are aligned with one another in such a way that the first focal point (4.1.p) of the first analysis laser (4.1) is arranged spaced apart from the second focal point (4.2.p) of the second analysis laser (4.2), wherein plasmas of the objects (2) are generable by means of the focal point (4.1.p) of the first analysis laser (4.1) and/or by means of the focal point (4.2.p) of the second analysis laser (4.2), and wherein emissions of said plasmas are analysable spectroscopically by means of the spectrometer (5), i.e. in particular the emissions of the objects (2) generated by the second focal point (4.2.p) are also capturable by means of the open fibre end (5.ofe).

21. System (1) according to Claim 20, **characterized in that** the first analysis laser (4.1) and the second analysis laser (4.2) are aligned with one another in such a way that the focal point (4.1.p) of the first analysis laser (4.1) and the focal point (4.2.p) of the second analysis laser (4.2) are arranged one above another on substantially a perpendicular (S) to the trajectory (6) of the objects (2).

22. System (1) according to any of Claims 19 to 21, **characterized in that** the first analysis laser (4.1) and the second laser (4.2, 4.2') are aligned with one another in such a way that the focal point (4.1.p) of the first analysis laser (4.1) and the focal point (4.2.p) of the second laser (4.2, 4.2') are arranged substantially horizontally adjacent to one another or horizontally spaced apart from one another.

23. System (1) according to any of Claims 16 to 22, **characterized in that** the first analysis laser (4.1) and/or the second laser (4.2, 4.2') have/has a pulse repetition rate, wherein the value of said pulse repetition rate in kHz corresponds to a specific value of the speed of the objects (2) upon leaving the feeding means (3) in m/s multiplied by a specific factor, in particular a factor of at least 15, and/or **in that** the first focal point (4.1.p) of the first analysis laser (4.1) and/or the second focal point (4.2.p) of the second laser (4.2, 4.2') have/has a focal point diameter of 0.1 mm to 0.2 mm, in particular of 0.15 mm.

24. System (1) according to any of Claims 19 to 23, **characterized in that** the first analysis laser (4.1) has a first lens for generating the first focal point (4.1.p) and the second laser (4.2, 4.2') has a second lens for generating the second focal point (4.2.p), wherein the first lens and the second lens each have an identical focal length, in particular of 250 mm to 400 mm, or **in that** the first analysis laser (4.1) has a first lens for generating the first focal point (4.1.p) and the second laser (4.2, 4.2') has a second lens for generating the second focal point (4.2.p), wherein the first lens and the second lens have mutually different focal lengths, in particular wherein a value of the focal length of the second lens is 5% to 10% less than or greater than a value of the focal length of the first lens.

25. System (1) according to any of Claims 16 to 24, **characterized in that** the first analysis laser (4.1), the spectrometer (5) and in particular the second laser (4.2, 4.2') are arranged above the trajectory (6) of the objects (2), or **in that** the first analysis laser (4.1), the spectrometer (5) and in particular the second laser (4.2, 4.2') are arranged below the trajectory (6) of the objects (2).

26. System (1) according to any of Claims 16 to 25, **characterized in that** the first analysis laser (4.1) and/or the second laser (4.2, 4.2') have/has an alignment device (7), wherein the alignment of the associated laser (4.1, 4.2, 4.2') and thus the location of the associated focal point (4.1.p, 4.2.p) are changeable by means of each alignment device (7), in particular wherein the spatial arrangement of the focal points (4.1.p, 4.2.p) of the first analysis laser (4.1) and the second laser (4.2, 4.2') with respect to one another and in relation to the field of view (5.s) of the spectrometer (5) is changeable, and/or **in that** an angle between the first laser beam (4.1.s) and the second laser beam (4.2.s) has a value of less than 30°, in particular less than 20°.

27. System according to one or more of the preceding Claims 16 to 26, **characterized in that** the feeding means (3) is configured and/or embodied in such a way that separation of the objects (2) and/or separated transport of the objects (2) on the feeding means (3), in particular in a sequential order lined up in a line, are/is made possible and realized, and/or **in that** the feeding means (3) is embodied as a conveyor belt (3) and/or as a chute, and/or **in that** the conveyor belt (3) is oriented substantially horizontally, and/or **in that** the conveyor belt (3) or the chute is configured to be cross-sectionally V-shaped or curved.

28. System (1) according to any of Claims 16 to 27, **characterized in that** a sorting device (8) is provided and/or present, wherein on the basis of the measurement data generated by means of the spectrometer (5), in particular depending on a determined material of the objects (2), the objects (2) are sortable into at least two different categories, in particular by means of an air jet, in particular the sorting device (8) has a blowing-out nozzle.

29. System (1) according to any of Claims 16 to 28, **characterized in that** at least one control unit (9) and/or one computer (9) are/is provided and/or present, in particular wherein the control unit (9) and/or the computer (9) are/is effectively connected in terms of control engineering to the feeding means (3), configured as a conveyor belt, for the control and/or regulation thereof, wherein the control unit (9) and/or the computer (9) are/is effectively connected in terms of control engineering to the first analysis laser (4.1) for the control and/or regulation thereof, wherein the control unit (9) and/or the computer (9) are/is effectively connected in terms of control engineering to the second laser (4.2, 4.2') for the control and/or regulation thereof, wherein the control unit (9) and/or the computer (9) are/is effectively connected in terms of control engineering and/or in terms of data technology to the spectrometer (5), wherein the measurement data generated by means of the spectrometer (5) are evaluable by means of the control unit (9) and/or the computer (9), in particular wherein the respective material of the respective objects (2) is determinable, and wherein the control unit (9) and/or the computer (9) are/is effectively connected in terms of control engineering to the sorting device (8) for the control and/or regulation thereof.

30. System according to one or more of the preceding Claims 16 to 29, **characterized in that** a first and a second control module (4.1.LM and 4.2.LM) are provided and/or present for controlling the first analysis laser (4.1) and for controlling the second laser (4.2, 4.2'), wherein the first analysis laser (4.1) and/or the second laser (4.2, 4.2') and/or the first and/or second control module (4.1.LM, 4.2.LM) are/is embodied and/or configured as an LIBS system or at least as part of an LIBS system.

31. System according to any of Claims 16 to 30, **characterized in that** the optical fibre (5.of) and/or the spectrometer (5) are/is configured and/or embodied as part of the LIBS system.

32. System according to Claim 30 or 31, in that the first and/or second control modules (4.1.LM and 4.2.LM) are configured functionally and/or in terms of component engineering as part of the control unit and/or of the computer (9), in particular the control unit and/or the computer (9) are/is also configured as part of the LIBS system.

33. System according to one or more of the preceding Claims 16 to 32, **characterized in that** at least one further detection means is provided and/or present, in particular a camera system is present, with the aid of which the geometry and/or size and/or the position of the fed objects (2) on the feeding means (3) are/is ascertainable, in particular the camera system is effectively connected to the control unit and/or the computer (9) in terms of control engineering, and/or **in that** the feeding means (3) for feeding and/or conveying the objects (2) has at least one feeding track (10).

34. System according to one or more of the preceding Claims 16 to 33, **characterized in that** the feeding means (3) for feeding and/or conveying the objects (2) has a plurality of feeding tracks (10), in particular a plurality of virtually separate or a plurality of physically separate feeding tracks (10), and each feeding track (10) is assigned a respective first and/or a respective second analysis laser (4.1 and 4.2) and/or an ablation laser (4.2') and a respective field of view (5.s) of a spectrometer (5), in particular each feeding track (10) is assigned a respective optical fibre (5.of) having an open fibre end (5.ofe) and/or a respective separate spectrometer (5).

35. System according to Claim 34, **characterized in that** the distance between mutually adjacent first and/or second analysis lasers (4.1 and/or 4.2) and/or adjacent ablation lasers (4.2') and/or the distance between mutually adjacent open fibre ends (5.ofe) are/is in the range of 20 to 200 mm, in particular in the range of 50 to 100 mm.

36. System according to either of Claims 34 and 35, **characterized in that** the sorting device (8) comprises a - first - nozzle strip having a plurality of blowing-out nozzles, wherein each feeding track (10) is assigned at least one blowing-out nozzle, and/or **in that** objects (2) which are not identifiable or are only inadequately identifiable are then feedable again to the feeding means (3) with the aid of a return system present.

## Revendications

1. Procédé d'analyse d'objets (2), en particulier de pièces métalliques et/ou de déchets d'aluminium, au moins un moyen d'acheminement (3), au moins un - premier - laser d'analyse (4.1) et au moins un spectromètre (5) étant prévus et/ou présents, les objets (2) étant acheminés, en particulier convoyés, à l'aide du moyen d'acheminement (3), et les objets (2) se déplaçant, à partir d'une extrémité (3.e) du moyen d'acheminement (3), sur une trajectoire (6) pour leur analyse, en particulier étant éjectés du moyen d'acheminement (3), un - premier - faisceau laser (4.1.s) présentant un - premier - point focal (4.1.p) étant généré au moyen du - premier - laser d'analyse (4.1), le laser d'analyse (4.1) étant orienté et/ou étant amené à être orienté de telle sorte par rapport au moyen d'acheminement (3) que les objets (2), pendant leur mouvement respectif sur leur trajectoire respective (6), traversent le faisceau laser (4.1.s) dans la zone du point focal (4.1.p), un champ de vision (5.s) du spectromètre (5) étant orienté et/ou étant amené à être orienté vers une zone de la trajectoire (6) des objets (2), le point focal (4.1.p) du laser d'analyse (4.1) se trouvant dans le champ de vision (5.s) du spectromètre (5), des plasmas des objets (2) étant générés au moyen du point focal (4.1.p) du laser d'analyse (4.1), et des émissions de ces plasmas étant analysées par spectroscopie au moyen du spectromètre (5), **caractérisé en ce que** le champ de vision (5.s) du spectromètre (5) est réalisé par une extrémité ouverte de fibre (5.ofe) d'une fibre optique (5.of).

2. Procédé selon la revendication 1, **caractérisé en ce que** des émissions des plasmas générés sur les objets (2) par le premier laser d'analyse (4.1) sont recueillies au moyen de l'extrémité ouverte de fibre (5.ofe).

3. Procédé selon la revendication 1 ou 2, **caractérisé en ce qu'**un deuxième laser est prévu et/ou présent, le deuxième laser étant réalisé et/ou conçu en tant que deuxième laser d'analyse (4.2) ou en tant que laser d'ablation (4.2') ou étant utilisé en conséquence, un deuxième faisceau laser (4.2.s) présentant un deuxième point focal (4.2.p) étant généré à l'aide du deuxième laser (4.2, 4.2'), le deuxième laser (4.2, 4.2') étant orienté et/ou étant amené à être orienté de telle sorte par rapport au moyen d'acheminement (3) que les objets (2), pendant leur mouvement respectif sur leur trajectoire respective (6), traversent le deuxième faisceau laser (4.2.s) dans la zone du deuxième point focal (4.2.p).

4. Procédé selon la revendication 3, **caractérisé en ce que** le deuxième point focal (4.2.p) du deuxième laser d'analyse (4.2) se trouve dans le champ de vision (5.s) du spectromètre (5), le premier laser d'analyse (4.1) et le deuxième laser d'analyse (4.2) étant orientés l'un par rapport à l'autre et/ou étant amenés à être orientés l'un par rapport à l'autre de telle sorte que le premier point focal (4.1.p) du premier laser d'analyse (4.1) soit espacé du deuxième point focal (4.2.p) du deuxième laser d'analyse (4.2), des plasmas des objets (2) étant générés au moyen du point focal (4.1.p) du premier laser d'analyse (4.1) et/ou au moyen du point focal (4.2.p) du deuxième laser d'analyse (4.2), et des émissions de ces plasmas étant analysées par spectroscopie au moyen du spectromètre (5), en particulier les émissions des objets (2) générées par le deuxième point focal (4.2.p) étant également recueillies au moyen de l'extrémité ouverte de fibre (5.ofe).

5. Procédé selon la revendication 4, **caractérisé en ce que** le premier laser d'analyse (4.1) et le deuxième laser d'analyse (4.2) sont orientés l'un par rapport à l'autre de telle sorte que le premier point focal (4.1.p) du premier laser d'analyse (4.1) et le deuxième point focal (4.2.p) du deuxième laser d'analyse (4.2) soient disposés l'un au-dessus de l'autre sur une droite (S) essentiellement perpendiculaire à la trajectoire (6) des objets (2).

6. Procédé selon l'une des revendications précédentes, **caractérisé en ce que** le premier laser d'analyse (4.1) et le deuxième laser (4.2, 4.2') sont orientés l'un par rapport à l'autre de telle sorte que le premier point focal (4.1.p) du premier laser d'analyse (4.1) et le deuxième point focal (4.2.p) du deuxième laser (4.2, 4.2') soient disposés essentiellement côte à côte horizontalement ou soient espacés horizontalement l'un par rapport à l'autre.

7. Procédé selon l'une des revendications précédentes, **caractérisé en ce que** des impulsions présentant un certain taux de répétition d'impulsions sont émises au moyen du premier laser d'analyse (4.1) et/ou au moyen du deuxième laser (4.2, 4.2'), la valeur de ce taux de répétition d'impulsions en kHz correspondant à une certaine valeur de la vitesse des objets (2) lors de leur sortie du moyen d'acheminement (3) en m/s multipliée par un certain facteur, en particulier un facteur d'au moins 15, un laser d'ablation (4.2') présentant en particulier un taux de répétition d'impulsions d'au moins 45 kHz et le -premier- laser d'analyse (4.1) présentant un taux de répétition d'impulsions d'au moins 5 kHz, et/ou, dans le cas où un premier et un deuxième laser d'analyse (4.1 ou 4.2) sont utilisés, ces lasers d'analyse présentant alors un taux de répétition d'impulsions en particulier d'au moins 20 kHz, notamment d'au moins 45 kHz.

8. Procédé selon l'une des revendications précédentes, **caractérisé en ce que** le premier laser d'analyse (4.1) et/ou le deuxième laser (4.2, 4.2') présente un dispositif d'orientation (7), l'orientation du laser associé (4.1, 4.2, 4.2') et ainsi l'emplacement du point focal associé (4.1.p, 4.2.p) étant modifiés, si nécessaire, au moyen de chaque dispositif d'orientation (7), en particulier l'agencement spatial des points focaux (4.1.p, 4.2.p) du premier laser d'analyse (4.1) et du deuxième laser (4.2, 4.2') l'un par rapport à l'autre et par rapport au champ de vision (5.s) du spectromètre (5) étant modifié.

9. Procédé selon l'une des revendications précédentes, **caractérisé en ce qu'**un dispositif de tri (8) est prévu et/ou présent, les objets (2) étant triés dans au moins deux catégories différentes sur la base des données de mesure générées au moyen du spectromètre (5), en particulier en fonction d'un matériau déterminé des objets (2), notamment au moyen d'un jet d'air.

10. Procédé selon l'une des revendications précédentes, **caractérisé en ce qu'**au moins une unité de commande (9) et/ou un ordinateur (9) est prévu et/ou présent, en particulier un moyen d'acheminement (3) réalisé sous la forme d'un convoyeur à bande étant commandé et/ou régulé au moyen de l'unité de commande (9) et/ou de l'ordinateur (9), le premier laser d'analyse (4.1) étant commandé et/ou régulé au moyen de l'unité de commande (9) et/ou de l'ordinateur (9), le deuxième laser (4.2, 4.2') étant commandé et/ou régulé au moyen de l'unité de commande (9) et/ou de l'ordinateur (9), le spectromètre (5) étant commandé et/ou régulé au moyen de l'unité de commande (9) et/ou de l'ordinateur (9), les données de mesure générées au moyen du spectromètre (5) étant évaluées au moyen de l'unité de commande (9) et/ou de l'ordinateur (9), en particulier le matériau des objets (2) respectifs étant déterminé, et le dispositif de tri (8) étant commandé et/ou régulé au moyen de l'unité de commande (9) et/ou de l'ordinateur (9), en particulier certains objets (2) respectifs étant éliminés par soufflage et/ou éliminés par tri.

11. Procédé selon l'une des revendications précédentes, **caractérisé en ce que** les objets (2) respectifs sont acheminés individuellement via le moyen d'acheminement (3), en particulier sont éjectés individuellement de manière séquentielle l'un après l'autre à partir de l'extrémité (3e) du moyen d'acheminement (3).

12. Procédé selon une ou plusieurs des revendications précédentes, **caractérisé en ce qu'**un premier et un deuxième module de commande (4.1.LM et 4.2.LM) sont prévus et/ou présents pour la commande du premier laser d'analyse (4.1) et pour la commande du deuxième laser (4.2, 4.2'), le premier laser d'analyse (4.1) et/ou le deuxième laser (4.2, 4.2') et/ou le premier et/ou le deuxième module de commande (4.1.LM, 4.2.LM) étant réalisé(s) et/ou conçu(s) comme un système LIBS ou au moins comme une partie d'un système LIBS.

13. Procédé selon la revendication 12, **caractérisé en ce que** la fibre optique (5.of) et/ou l'extrémité ouverte de fibre (5.ofe) et/ou le spectromètre (5) est/sont conçu(s) et/ou réalisé(s) comme une partie du système LIBS.

14. Procédé selon la revendication 12 ou 13, **caractérisé en ce que** les modules de commande (4.1.LM et 4.2.LM) sont réalisés, sur le plan fonctionnel et/ou sur le plan des composants, en tant qu'éléments constitutifs de l'unité de commande et/ou de l'ordinateur (9), en particulier l'unité de commande et/ou l'ordinateur (9) étant également conçu comme une partie du système LIBS.

15. Procédé selon une ou plusieurs des revendications précédentes, **caractérisé en ce qu'**au moins un autre moyen de détection est prévu et/ou présent, en particulier un système de caméra étant prévu et/ou présent, à l'aide duquel la géométrie et/ou la taille et/ou la position des objets (2) sur le moyen d'acheminement (3) peuvent être déterminées, le système de caméra étant notamment relié de manière opérationnelle à l'unité de commande et/ou à l'ordinateur (9) sur le plan de la commande.

16. Système (1) d'analyse d'objets (2), en particulier de pièces métalliques et/ou de déchets d'aluminium, notamment destiné à la mise en œuvre d'un procédé selon l'une des revendications 1 à 15, comprenant au moins un moyen d'acheminement (3), au moins un - premier - laser d'analyse (4.1) et au moins un spectromètre (5), les objets (2) pouvant être acheminés à l'aide du moyen d'acheminement (3), et les objets (2) pouvant être déplacés sur une trajectoire (6) à partir d'une extrémité (3e) du moyen d'acheminement (3) pour leur analyse, en particulier pouvant être éjectés du moyen d'acheminement (3), un - premier - faisceau laser (4.1.s) présentant un - premier - point focal (4.1.p) pouvant être généré au moyen du - premier - laser d'analyse (4.1), le laser d'analyse (4.1) étant orienté de telle sorte par rapport au moyen d'acheminement (3) que les objets (2), pendant leur mouvement respectif sur leur trajectoire respective (6), traversent le faisceau laser (4.1.s) dans la zone du point focal (4.1.p), le spectromètre (5) présentant un champ de vision (5.s), le champ de vision (5.s) du spectromètre (5) étant orienté vers une zone de la trajectoire (6) des objets (2), le point focal (4.1.p) du laser d'analyse (4.1) étant disposé dans le champ de vision (5.s) du spectromètre (5), des plasmas des objets (2) pouvant être générés au moyen du point focal (4.1.p) du laser d'analyse (4.1), et les émissions de ces plasmas pouvant être analysées par spectroscopie au moyen du spectromètre (5), **caractérisé en ce que** le champ de vision (5.s) du spectromètre (5) est réalisé par une extrémité ouverte de fibre (5.ofe) d'une fibre optique (5.of).

17. Système (1) selon la revendication 16, **caractérisé en ce que** des émissions des plasmas générés sur les objets (2) par le laser d'analyse (4.1) peuvent être recueillies au moyen de l'extrémité ouverte de fibre (5.ofe).

18. Système (1) selon la revendication 16 ou 17, **caractérisé en ce qu'**une distance entre l'extrémité ouverte de fibre (5.ofe) et une extrémité (3.e), en particulier un bord de déversement, du moyen d'acheminement (3) présente une valeur déterminée, notamment inférieure à 350 mm, en particulier comprise entre 50 mm et 200 mm, et/ou **en ce que** l'extrémité ouverte de fibre (5.ofe) présente une ouverture numérique ayant une valeur de 0,14 à 0,28, en particulier de 0,18 à 0,24, et/ou **en ce que** la fibre optique (5.of) est réalisée sous la forme d'une fibre à saut d'indice, en particulier d'une fibre multimode, et/ou **en ce que** la fibre optique (5.of) présente un noyau en verre de quartz et une gaine, la gaine présentant notamment une gaine extérieure en acrylate et une couche intermédiaire dopée au fluor, et/ou **en ce que** la fibre optique (5.of) présente un diamètre de noyau ayant une valeur de 50 µm à 700 µm, en particulier de 400 µm à 600 µm.

19. Système (1) selon l'une des revendications 16 à 18, **caractérisé en ce qu'**un deuxième laser est prévu et/ou présent, le deuxième laser étant réalisé et/ou conçu en tant que deuxième laser d'analyse (4.2) ou en tant que laser d'ablation (4.2') ou pouvant être utilisé en conséquence, un deuxième faisceau laser (4.2.s) présentant un deuxième point focal (4.2.p) pouvant être généré au moyen du deuxième laser (4.2, 4.2'), le deuxième laser (4.2, 4.2') étant orienté de telle sorte par rapport au moyen d'acheminement (3) que les objets (2), pendant leur mouvement respectif sur leur trajectoire respective (6), traversent le deuxième faisceau laser (4.2.s) dans la zone du deuxième point focal (4.2.p).

20. Système (1) selon la revendication 19, **caractérisé en ce que** le deuxième point focal (4.2.p) du deuxième laser d'analyse (4.2) est disposé dans le champ de vision (5.s) du spectromètre (5), le premier laser d'analyse (4.1) et le deuxième laser d'analyse (4.2) étant orientés l'un par rapport à l'autre de telle sorte que le premier point focal (4.1.p) du premier laser d'analyse (4.1) soit disposé à distance du deuxième point focal (4.2.p) du deuxième laser d'analyse (4.2), des plasmas des objets (2) pouvant être générés au moyen du point focal (4.1.p) du premier laser d'analyse (4.1) et/ou au moyen du point focal (4.2.p) du deuxième laser d'analyse (4.2), et des émissions de ces plasmas pouvant être analysées par spectroscopie au moyen du spectromètre (5), en particulier les émissions des objets (2) générées par le deuxième point focal (4.2.p) pouvant également être recueillies au moyen de l'extrémité ouverte de fibre (5.ofe).

21. Système (1) selon la revendication 20, **caractérisé en ce que** le premier laser d'analyse (4.1) et le deuxième laser d'analyse (4.2) sont orientés l'un par rapport à l'autre de telle sorte que le point focal (4.1.p) du premier laser d'analyse (4.1) et le point focal (4.2.p) du deuxième laser d'analyse (4.2) soient disposés l'un au-dessus de l'autre sur une droite (S) essentiellement perpendiculaire à la trajectoire (6) des objets (2).

22. Système (1) selon l'une des revendications 19 à 21, **caractérisé en ce que** le premier laser d'analyse (4.1) et le deuxième laser (4.2, 4.2') sont orientés l'un par rapport à l'autre de telle sorte que le point focal (4.1.p) du premier laser d'analyse (4.1) et le point focal (4.2.p) du deuxième laser (4.2, 4.2') soient disposés essentiellement côte à côte horizontalement ou soient espacés horizontalement l'un par rapport à l'autre.

23. Système (1) selon l'une des revendications 16 à 22, **caractérisé en ce que** le premier laser d'analyse (4.1) et/ou le deuxième laser (4.2, 4.2') présente un taux de répétition d'impulsions, la valeur de ce taux de répétition d'impulsions en kHz correspondant à une certaine valeur de la vitesse des objets (2) lors de leur sortie du moyen d'acheminement (3) en m/s multipliée par un certain facteur, en particulier un facteur d'au moins 15, et/ou **en ce que** le premier point focal (4.1.p) du premier laser d'analyse (4.1) et/ou le deuxième point focal (4.2.p) du deuxième laser (4.2, 4.2') présente un diamètre de point focal de 0,1 mm à 0,2 mm, en particulier de 0,15 mm.

24. Système (1) selon l'une des revendications 19 à 23, **caractérisé en ce que** le premier laser d'analyse (4.1) présente une première lentille pour générer le premier point focal (4.1.p) et le deuxième laser (4.2, 4.2') présente une deuxième lentille pour générer le deuxième point focal (4.2.p), la première lentille et la deuxième lentille présentant chacune une même distance focale, en particulier de 250 mm à 400 mm, ou **en ce que** le premier laser d'analyse (4.1) présente une première lentille pour générer le premier point focal (4.1.p) et le deuxième laser (4.2, 4.2') présente une deuxième lentille pour générer le deuxième point focal (4.2.p), la première lentille et la deuxième lentille présentant des distances focales différentes l'une de l'autre, en particulier une valeur de la distance focale de la deuxième lentille étant inférieure ou supérieure de 5 % à 10 % à une valeur de la distance focale de la première lentille.

25. Système (1) selon l'une des revendications 16 à 24, **caractérisé en ce que** le premier laser d'analyse (4.1), le spectromètre (5) et en particulier le deuxième laser (4.2, 4.2') sont disposés au-dessus de la trajectoire (6) des objets (2), ou **en ce que** le premier laser d'analyse (4.1), le spectromètre (5) et en particulier le deuxième laser (4.2, 4.2') sont disposés au-dessous de la trajectoire (6) des objets (2).

26. Système (1) selon l'une des revendications 16 à 25, **caractérisé en ce que** le premier laser d'analyse (4.1) et/ou le deuxième laser (4.2, 4.2') présente un dispositif d'orientation (7), l'orientation du laser associé (4.1, 4.2, 4.2') et ainsi l'emplacement du point focal associé (4.1.p, 4.2.p) pouvant être modifiés au moyen de chaque dispositif d'orientation (7), en particulier l'agencement spatial des points focaux (4.1.p, 4.2.p) du premier laser d'analyse (4.1) et du deuxième laser (4.2, 4.2') l'un par rapport à l'autre et par rapport au champ de vision (5.s) du spectromètre (5) pouvant être modifié, et/ou **en ce qu'**un angle entre le premier faisceau laser (4.1.s) et le deuxième faisceau laser (4.2.s) présente une valeur inférieure à 30°, en particulier inférieure à 20°.

27. Système selon une ou plusieurs des revendications 16 à 26, **caractérisé en ce que** le moyen d'acheminement (3) est conçu et/ou réalisé de telle sorte qu'une séparation des objets (2) et/ou un transport séparé des objets (2) sur le moyen d'acheminement (3), en particulier dans un ordre séquentiel les uns à la suite des autres en ligne, est permis et réalisé, et/ou **en ce que** le moyen d'acheminement (3) est réalisé sous la forme d'un convoyeur à bande (3) ou d'une goulotte, et/ou **en ce que** le convoyeur à bande (3) est orienté essentiellement horizontalement, et/ou **en ce que** le convoyeur à bande (3) ou la goulotte est réalisé, en section transversale, en forme de V ou sous forme bombée.

28. Système (1) selon l'une des revendications 16 à 27, **caractérisé en ce qu'**un dispositif de tri (8) est prévu et/ou présent, les objets (2) pouvant être triés dans au moins deux catégories différentes sur la base des données de mesure générées au moyen du spectromètre (5), en particulier en fonction d'un matériau déterminé des objets (2), notamment au moyen d'un jet d'air, le dispositif de tri (8) présentant en particulier une buse de soufflage.

29. Système (1) selon l'une des revendications 16 à 28, **caractérisé en ce qu'**au moins une unité de commande (9) et/ou un ordinateur (9) est prévu et/ou présent, en particulier l'unité de commande (9) et/ou l'ordinateur (9) étant relié de manière opérationnelle au moyen d'acheminement (3) réalisé sous forme de convoyeur à bande sur le plan de la commande pour sa commande et/ou sa régulation, l'unité de commande (9) et/ou l'ordinateur (9) étant relié de manière opérationnelle au premier laser d'analyse (4.1) sur le plan de la commande pour sa commande et/ou sa régulation, l'unité de commande (9) et/ou l'ordinateur (9) étant relié de manière opérationnelle au deuxième laser (4.2, 4.2') sur le plan de la commande pour sa commande et/ou sa régulation, l'unité de commande (9) et/ou l'ordinateur (9) étant relié de manière opérationnelle au spectromètre (5) sur le plan de la commande et/ou des données, les données de mesure générées au moyen du spectromètre (5) pouvant être évaluées au moyen de l'unité de commande (9) et/ou de l'ordinateur (9), en particulier le matériau respectif des objets (2) respectifs pouvant être déterminé, et l'unité de commande (9) et/ou l'ordinateur (9) étant relié de manière opérationnelle au dispositif de tri (8) sur le plan de la commande pour sa commande et/ou sa régulation.

30. Système selon une ou plusieurs des revendications 16 à 29, **caractérisé en ce qu'**un premier et un deuxième module de commande (4.1.LM et 4.2.LM) sont prévus et/ou présents pour la commande du premier laser d'analyse (4.1) et pour la commande du deuxième laser (4.2, 4.2'), le premier laser d'analyse (4.1) et/ou le deuxième laser (4.2, 4.2') et/ou le premier et/ou le deuxième module de commande (4.1.LM, 4.2.LM) étant réalisé(s) et/ou conçu(s) comme un système LIBS ou comme une partie d'un système LIBS.

31. Système selon l'une des revendications 16 à 30, **caractérisé en ce que** la fibre optique (5.of) et/ou le spectromètre (5) est/sont conçu(s) et/ou réalisé(s) comme une partie du système LIBS.

32. Système selon la revendication 30 ou 31, **caractérisé en ce que** le premier et/ou le deuxième module de commande (4.1.LM et 4.2.LM) est/sont conçu(s), sur le plan fonctionnel et/ou sur le plan des composants, comme une partie de l'unité de commande et/ou de l'ordinateur (9), en particulier l'unité de commande et/ou l'ordinateur (9) étant également conçu comme une partie du système LIBS.

33. Système selon une ou plusieurs des revendications 16 à 32, **caractérisé en ce qu'**au moins un autre moyen de détection est prévu et/ou présent, en particulier un système de caméra étant présent, à l'aide duquel la géométrie et/ou la taille et/ou la position des objets (2) acheminés sur le moyen d'acheminement (3) peuvent être déterminées, le système de caméra étant notamment relié de manière opérationnelle à l'unité de commande et/ou à l'ordinateur (9) sur le plan de la commande, et/ou **en ce que** le moyen d'acheminement (3) présente au moins une voie d'acheminement (10) pour l'acheminement et/ou le convoyage des objets (2).

34. Système selon une ou plusieurs des revendications 16 à 33, **caractérisé en ce que** le moyen d'acheminement (3) présente plusieurs voies d'acheminement (10), en particulier plusieurs voies d'acheminement (10) séparées virtuellement ou séparées physiquement, pour l'acheminement et/ou le convoyage des objets (2), et **en ce qu'**à chaque voie d'acheminement (10) sont affectés un premier et/ou un deuxième laser d'analyse (4.1 et 4.2) respectif et/ou un laser d'ablation (4.2') ainsi qu'un champ de vision (5.s) respectif d'un spectromètre (5), en particulier une fibre optique (5.of) respective avec une extrémité ouverte de fibre (5.ofe) et/ou un spectromètre (5) séparé respectif étant affecté à chaque voie d'acheminement (10).

35. Système selon la revendication 34, **caractérisé en ce que** la distance entre des premiers ou deuxièmes lasers d'analyse (4.1 ou 4.2) adjacents ou entre des lasers d'ablation (4.2') adjacents et/ou la distance entre des extrémités ouvertes de fibre (5.ofe) adjacentes se situe dans une plage de 20 à 200 mm, en particulier dans une plage de 50 à 100 mm.

36. Système selon l'une des revendications 34 ou 35, **caractérisé en ce que** le dispositif de tri (8) comprend une - première - rampe de buses présentant plusieurs buses de soufflage, au moins une buse de soufflage étant affectée à chaque voie d'acheminement (10), et/ou **en ce que** les objets (2) qui ne peuvent pas être identifiés ou qui ne peuvent être identifiés que de manière insuffisante peuvent alors être réacheminés vers le moyen d'acheminement (3) à l'aide d'un système de retour présent.
